# EUROPEAN PATENT SPECIFICATION

(11) **EP 3 860 254 B1**
(45) Date of publication and mention of the grant of the patent: **04.11.2026**
(21) Application number: 18935986.2
(22) Date of filing: 28.09.2018
(51) Int. Cl.: H04L 1/18, H04W 72/04, H04W 28/04

(54) **USER TERMINAL AND WIRELESS COMMUNICATION METHOD**
BENUTZERENDGERÄT UND DRAHTLOSKOMMUNIKATIONSVERFAHREN
TERMINAL D'UTILISATEUR ET PROCÉDÉ DE COMMUNICATION SANS FIL

(43) Date of publication of application: 04.08.2021
(73) Proprietor: NTT DOCOMO, INC., Chiyoda-ku Tokyo 100-6150 (JP)
(72) Inventor: YOSHIOKA, Shohei, Tokyo 100-6150 (JP); TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/036599
(87) International publication number: WO 2020/066025

(56) References cited:
- EP-A1- 3 051 909
- WO-A1-2018/142601
- WO-A1-2018/175820
- CN-A- 108 306 720
- JP-A- 2015 515 786
- OPPO: "Remaining issues for UL control", vol. RAN WG1, no. Gothenburg, Sweden; 20180820 - 20180824, 10 August 2018 (2018-08-10), XP051516264, Retrieved from the Internet <URL:http://www.3gpp.org/ftp/tsg%5Fran/WG1%5FRL1/TSGR1%5F94/Docs/R1%2D1808893%2Ezip> [retrieved on 20180810]
- SHARP: "Simultaneous PUCCH and PUSCH transmission and collision handling", vol. RAN WG1, no. Prague, Czech Republic; 20171009 - 20171013, 8 October 2017 (2017-10-08), XP051341600, Retrieved from the Internet <URL:http://www.3gpp.org/ftp/Meetings_3GPP_SYNC/RAN1/Docs/> [retrieved on 20171008]
- ERICSSON: "On PUCCH Resource Allocation", 3GPP TSG RAN WG1 #90BIS R1-1718639, 13 October 2017 (2017-10-13), XP051341812, Retrieved from the Internet <URL:http://www.3gpp.org/ftp/tsg_ran/WG1_RL1/TSGR1_90b/Docs/R1-1718639.zip> [retrieved on 20181130]
- MOTOROLA MOBILITY ET AL.: "Multiplexing of uplink channels with different transmission durations", 3GPP TSG RAN WG1 #91, RI-1720927, 30 November 2018 (2018-11-30), XP051370305, Retrieved from the Internet <URL:http://www.3gpp.org/ftp/tsg_ran/WG1_RL1/TSGR1_91/Docs/R1-1720927.zip>
- NTT DOCOMO: "Resource allocation for PUCCH", 3GPP TSG RAN WG1 MEETING #93, R1-1807065, 25 May 2018 (2018-05-25), XP051442263, Retrieved from the Internet <URL:http://www.3gpp.org/ftp/TSG_RAN/WG1_RL1/TSGR1_93/Docs/R1-1807065.zip> [retrieved on 20181130]

## Description

### Technical Field

The present disclosure relates to a user terminal and a radio communication method of a next-generation mobile communication system.

### Background Art

In Universal Mobile Telecommunications System (UMTS) networks, for the purpose of higher data rates and lower latency, Long Term Evolution (LTE) has been specified (Non-Patent Literature 1). Furthermore, for the purpose of wider bands and higher speeds than those of LTE, LTE successor systems (also referred to as, for example, LTE-Advanced (LTE-A), Future Radio Access (FRA), 4G, 5G, 5G+ (plus), New RAT (NR), and LTE Rel. 14 and 15~) are also studied.

Legacy LTE systems (e.g., LTE Rel. 8 to 13) perform communication on Downlink (DL) and/or Uplink (UL) by using subframes (also referred to as, for example, Transmission Time Intervals (TTIs)) of 1 ms. The subframe is a transmission time unit of 1 channel-coded data packet, and is a processing unit of scheduling, link adaptation and retransmission control (HARQ: Hybrid Automatic Repeat request).

Furthermore, in the legacy LTE systems (e.g., LTE Rel. 8 to 13), a user terminal transmits Uplink Control Information (UCI) by using an uplink control channel (e.g., PUCCH: Physical Uplink Control Channel) or an uplink shared channel (e.g., PUSCH: Physical Uplink Shared Channel). A configuration (format) of the uplink control channel will be referred to as, for example, a PUCCH format. Patent Literature 1 relates to a method for cross-carrier scheduling.

### Citation List

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

Patent Literature 1: WO 2018/175820 A1

### Summary of Invention

### Technical Problem

It has been studied for a future radio communication system (also referred to as NR below) to determine a resource (e.g., PUCCH resource) for an uplink control channel based on a higher layer signaling and a given field value in Downlink Control Information (DCI) when UCI is transmitted by using the uplink control channel (e.g., PUCCH).

Furthermore, it is studied for NR to indicate a transmission timing of a transmission acknowledgement signal (also referred to as HARQ-ACK) for a DL signal (e.g., PDSCH) to a UE by using DCI for scheduling the PDSCH. Hence, a case also occurs where transmission timings (or PUCCH resources) of HARQ-ACKs for respective PDSCHs scheduled to different transmission durations (e.g., slots) are indicated to the same slot.

In this case, how to control transmission of the HARQ-ACKs matters. For example, although, for example, Ultra Reliable and Low Latency Communications (URLLC) is requested to realize flexibilization of HARQ-ACK transmission timings and low latency of the HARQ-ACKs, how to perform control is not sufficiently studied.

It is therefore one of objects of the present disclosure to provide a user terminal and a radio communication method that can flexibly configure transmission timings of transmission acknowledgement signals.

### Solution to Problem

The subject-matter of the independent claims solves the technical problem/s described above. The dependent claims describe further preferred embodiments and the following description explains best modes for carrying out the present invention.

### Advantageous Effects of Invention

According to one aspect of the present disclosure, it is possible to flexibly configure transmission timings of transmission acknowledgement signals.

### Brief Description of Drawings

Fig. 1 is a diagram illustrating one example of allocation of PUCCH resources.
Fig. 2 is a diagram illustrating one example where transmission timings are configured to the same slot.
Fig. 3 is a diagram illustrating one example of HARQ-ACK transmission timings to which a unit whose granularity is 7 symbols is applied.
Fig. 4 is a diagram illustrating one example of HARQ-ACK transmission timings whose unit count start positions are different.
Fig. 5 is a diagram illustrating one example of table configurations of four PUCCH resource sets.
Fig. 6A is a diagram illustrating one of PUSCH piggyback that uses one HARQ-ACK codebook. Fig. 6B is a diagram illustrating one of PUSCH piggyback that uses a plurality of HARQ-ACK codebooks. Fig. 6C is a diagram illustrating one example of a case where HARQ-ACK is multiplexed on a symbol in which a PUSCH and a PUCCH overlap.
Fig. 7 is a diagram illustrating one example of control of an HARQ-ACK codebook and HARQ-ACK feedback that uses PUCCHs.
Fig. 8 is a diagram illustrating one example of a schematic configuration of a radio communication system according to one embodiment.
Fig. 9 is a diagram illustrating one example of a configuration of a base station according to the one embodiment.
Fig. 10 is a diagram illustrating one example of a configuration of a user terminal according to the one embodiment.
Fig. 11 is a diagram illustrating one example of hardware configurations of the base station and the user terminal according to the one embodiment.

### Description of Embodiments

For future radio communication systems (e.g., LTE Rel. 15 and subsequent releases, 5G and NR), a configuration (also referred to as, for example, a format or a PUCCH Format (PF)) for an uplink control channel (e.g., PUCCH) used for transmission of UCI has been studied. For example, it has been studied for LTE Rel. 15 to support 5 types of PFs 0 to 4. In this regard, names of PFs described below are only exemplary, and different names may be used.

For example, the PFs 0 and 1 are PFs that are used for transmission of UCI (e.g., transmission acknowledgement information (also referred to as, for example, HARQ-ACK: Hybrid Automatic Repeat reQuest-Acknowledge, ACK or NACK)) up to 2 bits. The PF 0 can be allocated to 1 or 2 symbols, and therefore is also referred to as, for example, a short PUCCH or a sequence-based short PUCCH. On the other hand, the PF 1 can be allocated to 4 to 14 symbols, and therefore is also referred to as, for example, a long PUCCH. According to the PF 1, a plurality of user terminals may be subjected to Code Division Multiplexing (CDM) in an identical PRB by time domain block-wise spreading that uses at least one of a Cyclic Shift (CS) and an Orthogonal Cover Code (OCC).

The PFs 2 to 4 are PFs that are used for transmission of UCI (e.g., Channel State
Information (CSI) (or CSI, and HARQ-ACK and/or a Scheduling Request (SR))) more than 2 bits. The PF 2 can be allocated to 1 or 2 symbols, and therefore is also referred to as, for example, a short PUCCH. On the other hand, the PFs 3 and 4 can be allocated to 4 to 14 symbols, and therefore is also referred to as, for example, a long PUCCH. According to the PF 4, a plurality of user terminals may be subjected to CDM by using pre-DFT (frequency domain) block-wise spreading.

A resource (e.g., PUCCH resource) used for transmission of the uplink control channel is allocated by using a higher layer signaling and/or Downlink Control Information (DCI). In this regard, the higher layer signaling only needs to be at least one of, for example, a Radio Resource Control (RRC) signaling, system information (e.g., at least one of RMSI: Remaining Minimum System Information, OSI: Other System Information, an MIB: Master Information Block and an SIB: System Information Block), and broadcast information (PBCH: Physical Broadcast Channel).

More specifically, one or more sets (PUCCH resource sets) each including one or more PUCCH resources are notified (configured) to a user terminal by a higher layer signaling. For example, K (e.g., 1 ≤ K ≤ 4) PUCCH resource sets may be notified to the user terminal from a radio base station. Each PUCCH resource set may include M (e.g., 8 ≤ M ≤ 32) PUCCH resources.

The user terminal may determine a single PUCCH resource set from the K configured PUCCH resource sets based on a payload size of UCI (UCI payload size). The UCI payload size may be the number of bits of UCI that does not include a Cyclic Redundancy Check (CRC) bit.

The user terminal may determine a PUCCH resource used for transmission of UCI based on at least one of DCI and implicit information (also referred to as, for example, implicit indication information or an implicit index) from the M PUCCH resources included in the determined PUCCH resource set.

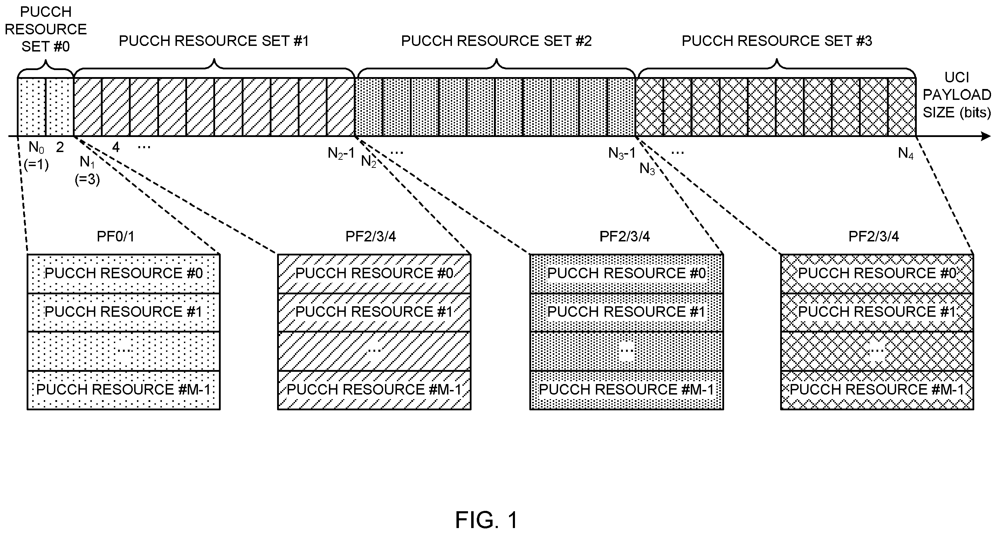

Fig. 1 is a diagram illustrating one example of allocation of PUCCH resources. Fig. 1 illustrates one example where K = 4 holds, and four PUCCH resource sets #0 to #3 are configured from the radio base station to the user terminal by a higher layer signaling. Furthermore, the PUCCH resource sets #0 to #3 each include M (e.g., 8 ≤ M ≤ 32) PUCCH resources #0 to #M-1. In addition, the number of PUCCH resources included in each PUCCH resource set may be identical or may be different.

When the PUCCH resource sets #0 to #3 are configured to the user terminal as illustrated in Fig. 1, the user terminal selects one of the PUCCH resource sets based on a UCI payload size.

When, for example, the UCI payload size is 1 or 2 bits, the PUCCH resource set #0 is selected. Furthermore, when the UCI payload size is 3 bits or more and N₂-1 bits or less, the PUCCH resource set #1 is selected. Furthermore, when the UCI payload size is N₂ bits or more and N₃-1 bits or less, the PUCCH resource set #2 is selected. Similarly, when the UCI payload size is N₃ bits or more and N₃-1 bits or less, the PUCCH resource set #3 is selected.

Thus, a range of the UCI payload size for selecting a PUCCH resource set #i (i = 0, ..., K-1) is indicated as Ni bits or more and N_{L+1}-1 bits or less (i.e., {Ni, ..., N_{L+1}-1} bits).

In this regard, start positions (the numbers of start bits) N₀ and N₁ of UCI payload sizes for the PUCCH resource sets #0 and #1 may be 1 and 3, respectively. Thus, the PUCCH resource set #0 is selected when UCI up to 2 bits is transmitted. Therefore, the PUCCH resource set #0 may include the PUCCH resources #0 to #M-1 for at least one of the PF 0 and the PF 1. On the other hand, one of the PUCCH resource sets #1 to #3 is selected when UCI more than 2 bits is transmitted. Therefore, the PUCCH resource sets #1 to #3 may each include the PUCCH resources #0 to #M-1 for at least one of the PF 2, the PF 3 and the PF 4.

According to NR, a transmission timing (e.g., K1) of HARQ-ACK for a PDSCH is notified to the UE by using DCI for scheduling the PDSCH. K1 may be information related to slots to which PUCCH resources are configured.

The UE controls transmission of the HARQ-ACK based on a PUCCH resource set notified from the base station, and the HARQ-ACK transmission timing notified by the DCI for scheduling the PDSCH. Transmission of the HARQ-ACK is controlled by using an HARQ-ACK codebook (in an HARQ-ACK codebook unit).

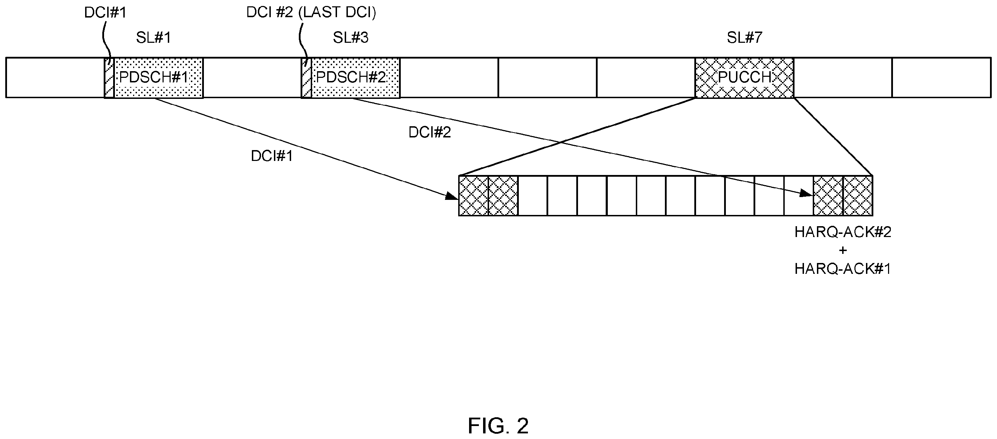

An HARQ-ACK transmission timing for each PDSCH can be flexibly configured by DCI. Therefore, a case also occurs where transmission timings of HARQ-ACKs for PDSCHs to be transmitted in different slots are configured to the same slot (see Fig. 2).

Fig. 2 illustrates a case where transmission timings of HARQ-ACK #1 for a PDSCH to be transmitted in a slot (SL #1) and HARQ-ACK #2 for a PDSCH to be transmitted in a slot (SL #3) are configured to the same slot (a slot (a slot (SL #7) in this case). In a case of, for example, K1 = 6 included in DCI #1 for scheduling a PDSCH #1, and K1 = 4 included in DCI #2 for scheduling a PDSCH #2, the transmission timings of the HARQ-ACK #1 and the HARQ-ACK #2 are configured to the same slot (SL #7).

In this case, how to control transmission of the HARQ-ACK #1 and the HARQ-ACK #2 matters. For example, it is conceived to restrict PUCCH resources used for HARQ-ACK transmission in each slot (to, for example, one PUCCH resource). In an example illustrated in Fig. 2, a PUCCH resource indicator of the DCI #1 indicates 2 symbols at a beginning of a slot, and a PUCCH resource indicator of the another DCI #2 indicates 2 symbols at an end of a slot. In this case, it is possible to transmit the two HARQ-ACK #1 and HARQ-ACK #2 by using the PUCCH resource indicated by the PUCCH resource indicator of the last DCI #2.

By the way, NR assumes that a certain UE performs a plurality of communications (a plurality of communications of different traffic types) associated with a plurality of services (e.g., Ultra Reliable and Low Latency Communications (URLLC) and enhanced Mobile Broad Band (eMBB)) of different requirements.

3GPP Rel. 16 (also referred to as NR Rel. 16 or 5G⁺) in particular assumes enhancement of the requirement of URLLC (e.g., a stricter requirement for reliability and latency than those of Rel. 15 is imposed). Although URLLC is requested to realize flexibilization of HARQ-ACK transmission timings and low latency of HARQ-ACKs, how to perform control is not sufficiently studied.

Hence, the inventors of the present disclosure have studied a transmission method that uses a plurality of different uplink control channel resources when a plurality of these uplink control channel resources are allocated in one slot, and reached the present invention.

One embodiment of the present disclosure will be described in detail below with reference to the drawings.

### (First Aspect)

According to the first aspect, a transmission timing of a transmission acknowledgement signal (HARQ-ACK) for a downlink shared channel (PDSCH) is determined in a unit of a given number of symbols shorter than 1 slot based on Downlink Control Information (DCI) used to schedule the downlink shared channel (PDSCH). Furthermore, the transmission acknowledgement signal may be transmitted based on an uplink control channel resource indicated by the downlink control information. A base station may transmit to a user terminal the DCI including a field that indicates the HARQ-ACK transmission timing in the unit of the given number of symbols shorter than the 1 slot.

As described above, according to NR, a transmission timing of HARQ-ACK for a PDSCH is indicated to the UE by DCI for scheduling the PDSCH. More specifically, a slot used to feed back the HARQ-ACK is indicated in a given field (HARQ-ACK feedback timing) included in the DCI.

According to the first aspect, a time unit (referred to as a unit below) whose granularity is smaller than 1 slot is used as a time unit that indicates an HARQ-ACK transmission timing. A unit for transmitting HARQ-ACK for a PDSCH can be indicated by a parameter K1 set to DCI.

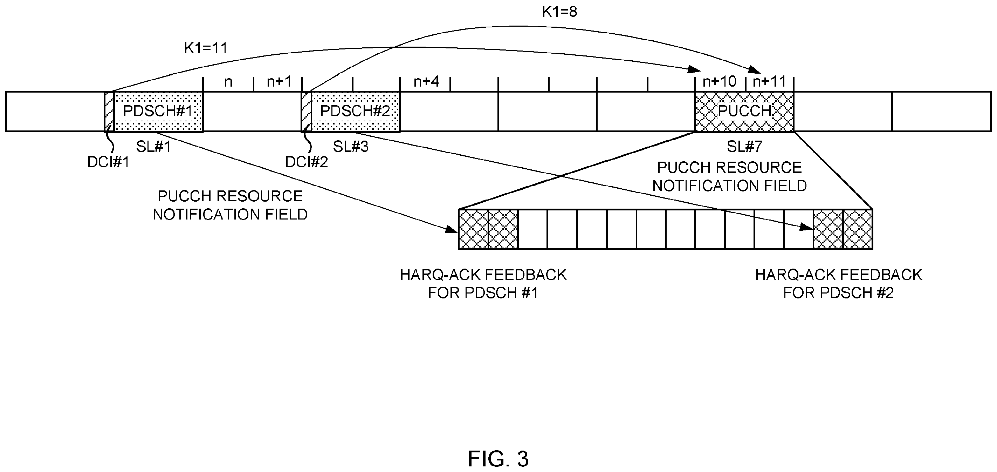

Fig. 3 illustrates an example of an HARQ-ACK transmission timing to which a unit whose granularity is 7 symbols is applied. In this example, counting starts from a next unit of a PDSCH scheduled by DCI. Furthermore, a unit size is 7 symbols obtained by dividing 1 slot into two. In this case, a unit number increases every 7 symbols. In the example illustrated in Fig. 3, the user terminal receives a PDSCH #1 scheduled by DCI #1 in a slot (SL #1), and receives a PDSCH #2 scheduled by DCI #2 in a slot (SL #3). Furthermore, a next unit number of the PDSCH #1 scheduled by the DCI #1 is n.

The DCI #1 schedules the PDSCH #1, and a parameter K1 (= 11) set to the DCI #1 indicates a unit (= n+10) for transmitting HARQ-ACK for the PDSCH #1. The DCI #2 schedules the PDSCH #2, and the parameter K1 (= 8) set to the DCI #2 indicates a unit (= n+11) for transmitting HARQ-ACK for the PDSCH #2. In this example, the DCI #1 and the DCI #2 indicate the same slot (SL #7).

Furthermore, a PUCCH indicator field included in the DCI #1 indicates a PUCCH resource #1, and a PUCCH indicator field included in the DCI #2 indicates a PUCCH resource #2. 2 symbols at a beginning of the slot (SL #7) are allocated to the PUCCH resource #1, and 2 symbols at an end of the slot (SL #7) are allocated to the PUCCH resource #2.

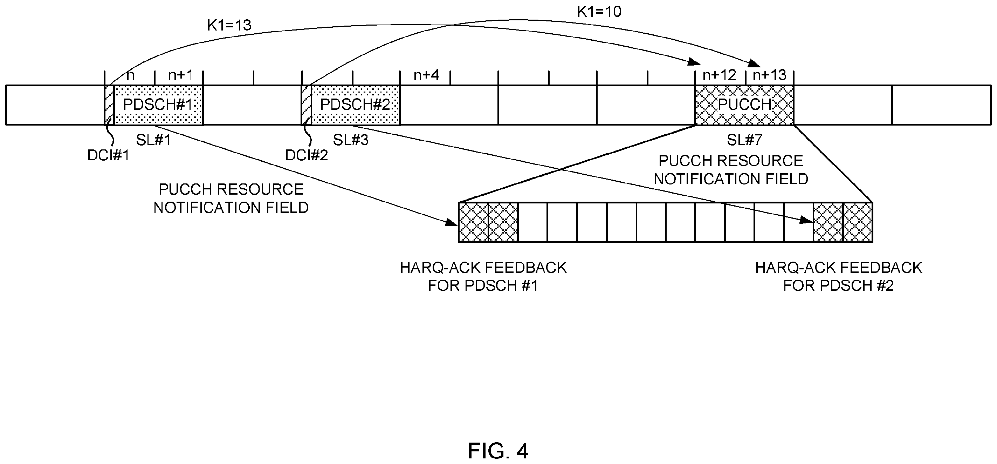

An example where counting starts from a next unit of DCI will be described with reference to Fig. 4. Furthermore, Fig. 4 illustrates the example where a unit granularity is 7 symbols. The user terminal receives the PDSCH #1 scheduled by the DCI #1 in the slot (SL #1), and receives the PDSCH #2 scheduled by the DCI #2 in the slot (SL #3). Furthermore, a next unit number of the DCI #1 is n. In this regard, a timing to start counting is not limited to this. For example, counting may start from a unit including the DCI.

The DCI #1 schedules the PDSCH #1, and the parameter K1 (= 13) set to the DCI #1 indicates a unit (= n+12) for transmitting the HARQ-ACK for the PDSCH #1. The DCI #2 schedules the PDSCH #2, and the parameter K1 (= 10) set to the DCI #2 indicates a unit (= n+13) for transmitting the HARQ-ACK for the PDSCH #2. In this example, the DCI #1 and the DCI #2 indicate the same slot (SL #7).

A granularity of a unit that is the time unit that indicates an HARQ-ACK transmission timing can be determined based on a length (time domain) of a PDSCH. The unit granularity can be dynamically switched according to the length of the PDSCH to be scheduled. When, for example, the number of symbols (N) to be allocated to the PDSCH is smaller than 7 symbols (N < 7), twice as much a granularity as the number of symbols (N) is applicable to the unit. On the other hand, when the number of symbols (N) to be allocated to the PDSCH is larger than 7 symbols (N ≥ 7), the same granularity as the number of symbols (N) of the PDSCH is applicable to the unit. The unit granularity that indicates the HARQ-ACK transmission timing can be referred to as a granularity of the parameter K1.

Thus, while the same slot is indicated in a slot unit, it is possible to indicate different units by using the unit whose granularity is smaller than 1 slot as the time unit that indicates the HARQ-ACK transmission timing. Consequently, it is possible to indicate the HARQ-ACK transmission timing in a unit of a given number of symbols shorter than the 1 slot, so that a probability of collision of the transmission timing of the HARQ-ACK #2 is reduced and HARQ-ACK transmission timings are flexibly configured compared to a case where the granularity of 1 slot is applied as a transmission timing.

Alternatively, the number of PUCCH resource candidates included in a PUCCH resource set (e.g., PUCCH resource set 1 and subsequent PUCCH resource sets) used to indicate PUCCH resources may be defined to become larger than a given value. The given value may be, for example, 8. Furthermore, the number of bits of a PUCCH resource notification field included in DCI may be configured to become larger than 3 bits. That is, the number of PUCCH resource candidates included in the PUCCH resource sets in a first configuration where a plurality of PUCCH resources are supported in 1 slot as described in the present embodiment is configured to become larger than 8 that is the number of candidates in the PUCCH resource sets (e.g., the PUCCH resource set 1 and the subsequent PUCCH resource sets) of a legacy mechanism (a second configuration where only one PUCCH resource is supported in 1 slot). Consequently, it is possible to configure the PUCCH resources in a more detailed manner in the configuration where a plurality of PUCCH resources are supported in 1 slot.

A plurality of PUCCH resource sets are configured to the user terminal by using a higher layer signaling. One PUCCH resource set is configured to enable selection of one PUCCH resource from a plurality of PUCCH resources. For example, PUCCH resources (PUCCH resource ID) the number of which corresponds to the number of bits are specified in a PUCCH resource indication field (ARI) that is expressed by given bits. The user terminal can select a PUCCH resource associated with the ARI indicated by DCI in the one PUCCH resource set.

The legacy mechanism (above second configuration) is configured to express an ARI of a PUCCH resource indication field as 3 bits, and enable selection of one PUCCH resource from eight PUCCH resource candidates. By contrast with this, the above first configuration is configured to express the ARI of the PUCCH resource indication field as 4 bits or more, and enable selection of 2 or more PUCCH resources respectively configured to 1 slot from a PUCCH resource set including 9 or more PUCCH resource candidates.

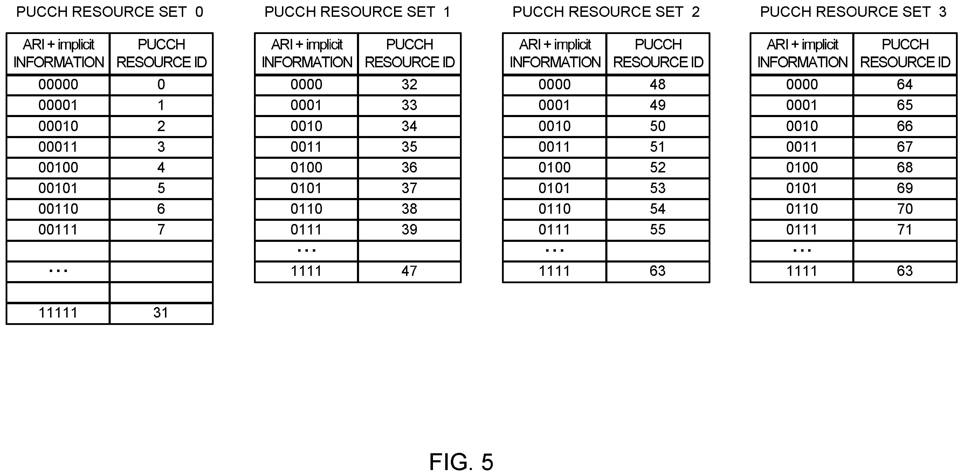

Fig. 5 illustrates applicable table configurations in the first configuration. A case is assumed where four PUCCH resource set 0 to PUCCH resource set 3 are configured. A PUCCH resource indication field of the PUCCH resource set 0 includes 5 bits, and 32 PUCCH resource candidates are configured to the PUCCH resource set 0. PUCCH resource indication fields of the PUCCH resource sets 1 to 3 include 4 bits, and 16 PUCCH resource candidates are configured to each of the PUCCH resource sets 1 to 3. The first configuration supports a plurality of PUCCH resources in 1 slot, and therefore the number of PUCCH resource candidates is increased compared to the second configuration.

The PUCCH resource sets that comply with the above first configuration and the PUCCH resource sets that comply with the above second configuration may be configured together, and switched according to a service type. There are, for example, Ultra-Reliable and Low Latency Communications (URLLC) that is a service type of ultra reliability and low latency, and enhanced Mobile BroadBand (eMBB) that is a service type of a high speed and a large capacity. URLLC is referred to as a first service type, and eMBB is referred to as a second service type.

The service type (or a traffic type) associated with URLLC and the service type associated with eMBB may be identified based on at least one of followings.
·A logical channel that has a different priority
·A Modulation and Coding Scheme (MCS) table (MCS index table)
·A DCI format
·A radio network temporary identifier (system information-Radio Network Temporary Identifier (RNTI)) used to scramble (mask) a Cyclic Redundancy Check (CRC) bit included in (added to) the DCI (DCI format)
·A Radio Resource Control (RRC) parameter
·A specific RNTI (e.g., an RNTI for URLLC or an MCS-C-RNTI)
·A search space
·A given field (e.g., reuse of an additionally added field or a legacy field) in the DCI

For example, the UE may decide whether the service type is URLLC or eMBB based on the above condition (e.g., at least one of the Radio Network Temporary Identifier (RNTI) to be applied to DCI, the modulation and coding table and the transmission parameter). When, for example, deciding the service type as URLLC, the UE may apply a time unit whose granularity is smaller than 1 slot as the time unit that indicates the HARQ-ACK transmission timing.

The PUCCH resource sets that comply with the first configuration are applied to the first service type (URLLC), and the PUCCH resource sets that comply with the second configuration are applied to eMBB. Alternatively, a given number of PUCCH resource candidates (e.g., eight PUCCH resource candidates) of the PUCCH resource sets that comply with the first configuration are shared between the first service type and the second service type. In a case of, for example, the PUCCH resource set 1 illustrated in Fig. 5, the eight PUCCH resource candidates are shared between the first service type and the second service type in ARI = 0000 to 0111. Furthermore, the rest of PUCCH resource candidates indicated by ARI = 0111 to 1111 are applied only to the first service type.

Furthermore, which ones of the PUCCH resource sets that comply with the above first configuration and the PUCCH resource sets that comply with the above second configuration to apply may be configured by a higher layer signaling.

### (Second Aspect)

According to the second aspect, when a plurality of PUCCHs configured to a given slot, and a PUSCH overlap, at least part of HARQ-ACKs among HARQ-ACKs respectively allocated to a plurality of PUCCHs are transmitted by using the PUSCH.

A case is assumed where a plurality of PUCCHs are indicated for transmission of different HARQ-ACKs in 1 slot. Furthermore, a case is assumed where a plurality of these PUCCHs overlap (collide with) the PUSCH.

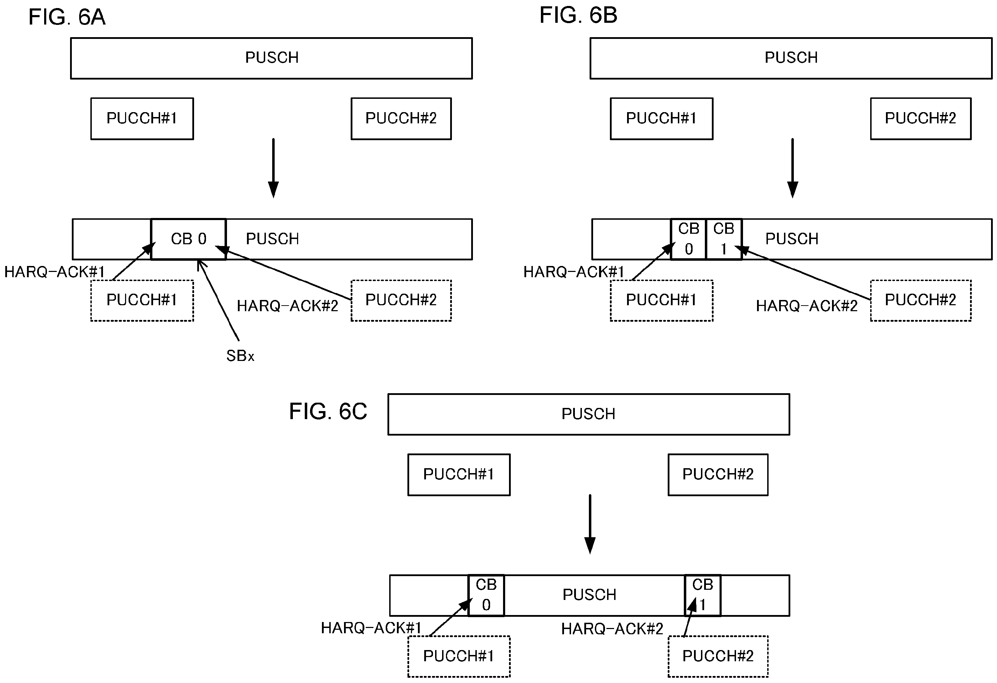

According to the second aspect, in such a situation, a plurality of HARQ-ACKs on all PUCCHs are set to one HARQ-ACK codebook, multiplexed on the PUSCH, and transmitted (piggybacked). As illustrated in, for example, Fig. 6A, transmission timings of different HARQ-ACKs #1 and #2 are indicated in the same slot, and PUCCHs #1 and #2 indicated for transmission of the HARQ-ACKs #1 and #2, and a PUSCH overlap in a time domain.

According to the second aspect, the HARQ-ACKs #1 and #2 are set to one HARQ-ACK codebook (CB 0), multiplexed on a given resource on the PUSCH, and transmitted. Furthermore, the different HARQ-ACKs #1 and #2 may be set to HARQ-ACK codebooks (the CB 0 and a CB 1), respectively, and multiplexed on given resources on the PUSCH (see Fig. 6B).

Furthermore, instead of multiplexing, on the PUSCH, HARQ-ACKs on all PUCCHs, it is also possible to multiplex, on the PUSCH, HARQ-ACKs on part of (one or some) PUCCHs, and drop the rest of HARQ-ACKs.

Which HARQ-ACKs on which PUCCHs to multiplex on the PUSCH can be determined based on a given rule. For example, only a PUCCH of the earliest time among PUCCHs indicated in 1 slot is selected (rule 1). Alternatively, a PUCCH whose number of HARQ-ACKs is the largest is selected (rule 2). Alternatively, PUCCHs are selected in a given order until a coding rate becomes a given value (e.g., a maximum value) (rule 3). In a case of the rule 3, the given order may be determined according to the rule 1 or the rule 2.

According to the second aspect, HARQ-ACKs on PUCCHs can be multiplexed on a symbol in which the PUCCHs collide in the PUSCH. In an example illustrated in Fig. 6C, the PUSCH and the PUCCH #1 collide in a symbol SBx (1 or more symbols). Hence, the HARQ-ACK #1 on the PUCCH #1 is multiplexed on the symbol SBx.

Furthermore, when a DMRS is arranged in a symbol in which PUCCHs collide in a PUSCH, HARQ-ACKs may be multiplexed on a next symbol.

Furthermore, when a plurality of PUCCHs configured to a given slot, and a PUSCH overlap, the PUSCH may be dropped. When the dropped PUSCH includes UCI, at least HARQ-ACKs may be multiplexed on a last or first PUCCH that has collided, and transmitted.

Furthermore, when a plurality of PUCCHs configured to a given slot, and a PUSCH overlap, handling in an error case may be taken. For example, an error is notified or nothing is notified in the error case.

Furthermore, when a plurality of PUCCHs configured to a given slot, and a PUSCH overlap, and only when a size of each PUCCH is 2 bits at maximum, transmission of HARQ-ACK that uses the PUCCH may be permitted. In this case, resources that collide with PUCCHs in the PUSCH may be punctured. Performing puncture processing on data refers to performing encoding assuming that resources allocated for the data can be used (or without taking an unavailable resource amount into account), yet not mapping encoded symbols on resources (e.g., UCI resources) that cannot be actually used (i.e., keeping resources unused). That is, a code sequence of mapped uplink data is overridden with UCI. By not using the encoded symbols of the punctured resources for decoding on a reception side, it is possible to suppress deterioration of characteristics due to the puncturing.

### (Third Aspect)

According to the third aspect, when a plurality of PUCCHs configured to a given slot overlap (collide), all HARQ-ACKs on these PUCCHs are set to one HARQ-ACK codebook, and transmitted by using one of the PUCCHs.

PUCCH resources used to transmit a plurality of HARQ-ACKs may be determined by using a UCI payload size and ARIs included in DCI. A PUCCH resource set is configured to a user terminal by a higher layer signaling. A single PUCCH resource set is determined from a plurality of PUCCH resource sets based on the UCI payload size. Furthermore, PUCCH resources may be determined from M PUCCH resources included in the determined PUCCH resource set based on the ARIs included in the DCI.

Special PUCCH resources may be prepared as PUCCH resources used to transmit a plurality of HARQ-ACKs. Information of the special PUCCH resources may be notified to the user terminal by a higher layer signaling. When a plurality of PUCCHs configured to a given slot overlap (collide), the user terminal sets all HARQ-ACKs on these PUCCHs to one HARQ-ACK codebook to transmit by using the special PUCCH resources.

Furthermore, when a plurality of PUCCHs configured to a given slot overlap (collide), all HARQ-ACKs on these PUCCHs may be set to different HARQ-ACK codebooks, and transmitted by using one of PUCCHs.

Furthermore, when a plurality of PUCCHs configured to a given slot overlap (collide), part of HARQ-ACKs may be set to one or a plurality of HARQ-ACK codebooks, and transmitted by using one of PUCCHs, and the rest of HARQ-ACKs may be dropped. A given rule described in the second aspect is applicable to which HARQ-ACKs on which PUCCHs to keep.

Furthermore, the second aspect that specifies an operation in a case where a plurality of PUCCHs configured to a given slot, and a PUSCH (or a long PUCCH) collide, and the third aspect that specifies an operation in a case where a plurality of PUCCHs configured to a given slot collide may be switched according to a service type (URLLC or eMBB).

Next, HARQ-ACK transmission in a case where a plurality of PUCCHs configured to a given slot and a long PUCCH including UCI collide will be described.

A case is assumed where a plurality of PUCCHs are indicated for transmission of different HARQ-ACKs in 1 slot, and a plurality of these PUCCHs overlap (collide with) the long PUCCH.

In such a situation, a plurality of HARQ-ACKs on all PUCCHs are set to one HARQ-ACK codebook, and multiplexed on the long PUCCH, and transmitted (piggybacked). Furthermore, different HARQ-ACKs #1 and #2 may be set to HARQ-ACK codebooks (a CB 0 and a CB 1), respectively, and multiplexed on given resources on the long PUCCH.

Furthermore, instead of multiplexing, on the long PUCCH, HARQ-ACKs on all PUCCHs, it is also possible to multiplex, on the long PUCCH, HARQ-ACKs on part of (one or some) PUCCHs, and drop the rest of HARQ-ACKs.

Which HARQ-ACKs on which PUCCHs to multiplex on the long PUCCH can be determined based on the given rule (see rules 1 to 3 according to the second aspect).

HARQ-ACKs on PUCCHs can be multiplexed on a symbol in which the PUCCHs collide in the long PUCCH. Furthermore, when a DMRS is arranged in a symbol in which PUCCHs collide in a long PUCCH, HARQ-ACKs may be multiplexed on a next symbol. Furthermore, when the dropped long PUCCH includes UCI, at least HARQ-ACKs may be multiplexed on a last or first PUCCH that has collided. Alternatively, all pieces of UCI may be dropped.

Furthermore, when a plurality of PUCCHs configured to a given slot, and a long PUCCH overlap, the long PUCCH may be dropped. Furthermore, when the dropped long PUCCH includes UCI, at least HARQ-ACKs may be multiplexed on a last or first PUCCH that has collided, and transmitted.

Furthermore, when a plurality of PUCCHs configured to a given slot, and a long PUCCH overlap, handling in an error case may be taken. For example, an error is notified or nothing is notified in the error case.

Furthermore, when a plurality of PUCCHs configured to a given slot, and a long PUCCH overlap, and only when a size of each PUCCH is 2 bits at maximum, transmission of HARQ-ACK that uses the PUCCH may be permitted. In this case, resources that collide with PUCCHs in the long PUCCH may be punctured.

### (Fourth Aspect)

According to the fourth aspect, when a plurality of PUCCH resources configured to a given slot collide, a plurality of HARQ-ACKs included in a temporally earliest PUCCH resource (PUCCH resource A) and a PUCCH resource (PUCCH resource B) that collides with the PUCCH resource A among a plurality of these PUCCH resources are set to one HARQ-ACK codebook, and are multiplexed on a PUCCH resource indicated by temporally latest DCI among pieces of DCI that indicate the PUCCH resource A and the PUCCH resource B. The PUCCH resource B may be a plurality of PUCCH resources.

When transmission timings (slots) of HARQ-ACKs notified by the DCI are the same, and when a PUCCH resource for HARQ-ACK that is allocated first in a time direction in a slot collides with other PUCCH resources, the user terminal sets a plurality of HARQ-ACKs to one HARQ-ACK codebook to collectively transmit in a given resource. The given PUCCH resource may be, for example, a PUCCH resource determined based on a last DCI format detected by the user terminal.

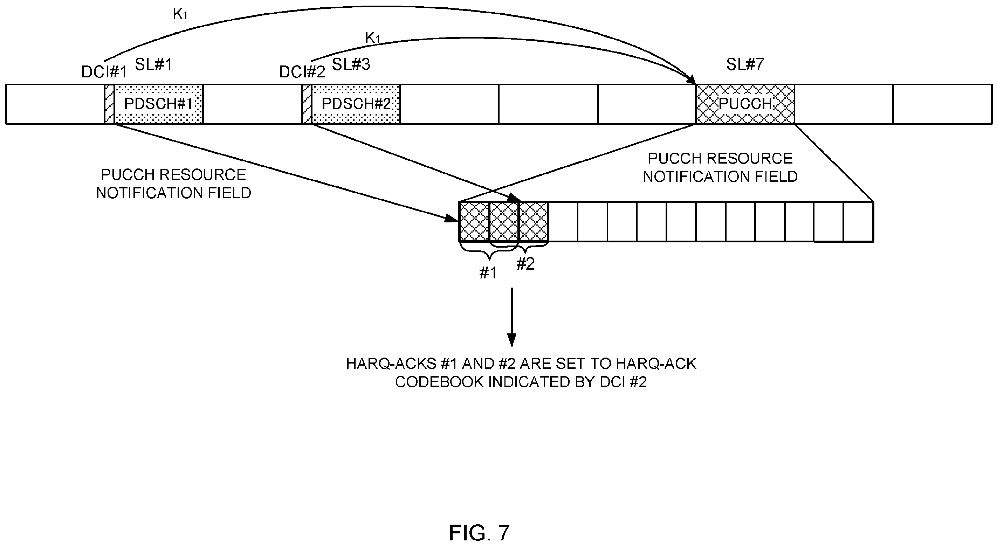

Control of an HARQ-ACK codebook and HARQ-ACK feedback that uses a PUCCH will be described with reference to Fig. 7.

The user terminal receives a PDSCH #1 scheduled by DCI #1 in a slot (SL #1), and receives a PDSCH #2 scheduled by DCI #2 in a slot (SL #3). In this example, regarding the DCI #1 and the DCI #2, the DCI #2 is interpreted as last DCI detected by the user terminal.

The DCI #1 schedules the PDSCH #1, and a parameter K1 (= 6) set to the DCI #1 indicates a slot for transmitting HARQ-ACK for the PDSCH #1. The DCI #2 schedules the PDSCH #2, and the parameter K1 (= 4) set to the DCI #2 indicates a slot for transmitting HARQ-ACK for the PDSCH #2. In this example, the DCI #1 and the DCI #2 indicate the same slot (SL #7).

Furthermore, a PUCCH indicator field included in the DCI #1 indicates a PUCCH resource #1, and a PUCCH indicator field included in the DCI #2 indicates a PUCCH resource #2. 2 symbols (e.g., symbols #0 and #1) at a beginning of the slot (SL #7) are allocated to the PUCCH resource #1, and symbols #2 and #2 of the slot (SL #7) are allocated to the PUCCH resource #2. The PUCCH resource #1 is the earliest PUCCH resource in the slot (SL #7).

The user terminal detects the DCI #1 and the DCI #2 in the slot (SL #1) and the slot (SL #3), respectively, demodulates the PDSCH #1 and the PDSCH #2 based on the DCI #1 and the DCI #2, and determines the HARQ-ACK #1 and the HARQ-ACK #2 for the PDSCH #1 and the PDSCH #2.

The user terminal controls generation of an HARQ-ACK codebook based on HARQ-ACK transmission timings (e.g., slots to which PUCCH resources are allocated) notified by the pieces of DCI #1 and #2. More specifically, the user terminal recognizes that the HARQ-ACK transmission timings (slots) notified by the pieces of DCI #1 and #2 are the same slot (SL #7). Furthermore, the user terminal recognizes that the PUCCH resources include the earliest PUCCH resource in the slot (SL #7). The user terminal generates an HARQ-ACK codebook for setting the HARQ-ACK #1 and the HARQ-ACK #2 for the PDSCH #1 and the PDSCH #2 to the same HARQ-ACK codebook based on the recognition result.

### (Radio Communication System)

The configuration of the radio communication system according to one embodiment of the present disclosure will be described below. This radio communication system uses one or a combination of the radio communication method according to each of the above embodiment of the present disclosure to perform communication.

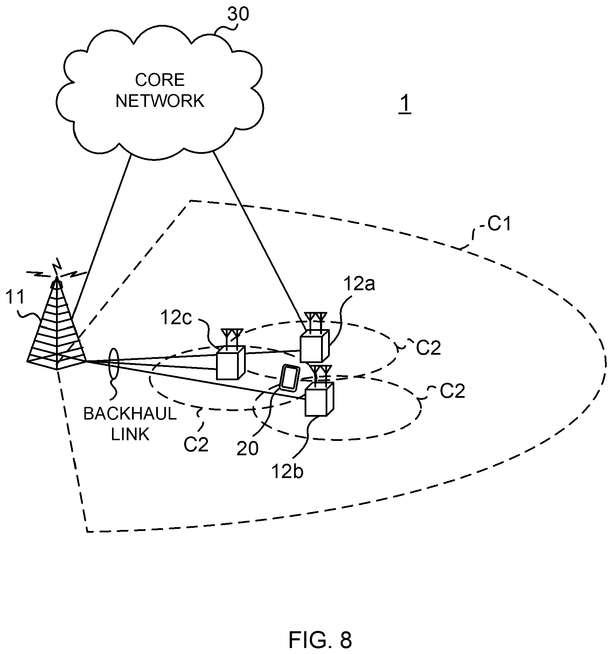

Fig. 8 is a diagram illustrating one example of a schematic configuration of the radio communication system according to the one embodiment. A radio communication system 1 may be a system that realizes communication by using Long Term Evolution (LTE) or the 5th generation mobile communication system New Radio (5G NR) specified by the Third Generation Partnership Project (3GPP).

Furthermore, the radio communication system 1 may support dual connectivity (Multi-RAT Dual Connectivity (MR-DC)) between a plurality of Radio Access Technologies (RATs). MR-DC may include dual connectivity (EN-DC: E-UTRA-NR Dual Connectivity) of LTE (E-UTRA: Evolved Universal Terrestrial Radio Access) and NR, and dual connectivity (NE-DC: NR-E-UTRA Dual Connectivity) of NR and LTE.

According to EN-DC, a base station (eNB) of LTE (E-UTRA) is a Master Node (MN), and a base station (gNB) of NR is a Secondary Node (SN). According to NE-DC, a base station (gNB) of NR is an MN, and a base station (eNB) of LTE (E-UTRA) is an SN.

The radio communication system 1 may support dual connectivity between a plurality of base stations in an identical RAT (e.g., dual connectivity (NN-DC: NR-NR Dual Connectivity) where both of the MN and the SN are base stations (gNBs) according to NR).

The radio communication system 1 includes a base station 11 that forms a macro cell C1 of a relatively wide coverage, and base stations 12 (12a to 12c) that are located in the macro cell C1 and form small cells C2 narrower than the macro cell C1. The user terminal 20 may be located in at least one cell. An arrangement and the numbers of respective cells and the user terminals 20 are not limited to the aspect illustrated in Fig. 8. The base stations 11 and 12 will be collectively referred to as a base station 10 below when not distinguished.

The user terminal 20 may connect with at least one of a plurality of base stations 10. The user terminal 20 may use at least one of Carrier Aggregation and Dual Connectivity (DC) that uses a plurality of Component Carriers (CCs).

Each CC may be included in at least one of a first frequency range (FR1: Frequency Range 1) and a second frequency range (FR2: Frequency Range 2). The macro cell C1 may be included in the FR1, and the small cell C2 may be included in the FR2. For example, the FR1 may be a frequency range equal to or less than 6 GHz (sub-6 GHz), and the FR2 may be a frequency range higher than 24 GHz (above-24 GHz). In addition, the frequency ranges and definitions of the FR1 and the FR2 are not limited to these, and for example, the FR1 may correspond to a frequency range higher than the FR2.

Furthermore, the user terminal 20 may perform communication by using at least one of Time Division Duplex (TDD) and Frequency Division Duplex (FDD) in each CC.

A plurality of base stations 10 may be connected by way of wired connection (e.g., optical fibers compliant with a Common Public Radio Interface (CPRI) or an X2 interface) or radio connection (e.g., NR communication). When, for example, NR communication is used as backhaul between the base stations 11 and 12, the base station 11 corresponding to a higher station may be referred to as an Integrated Access Backhaul (IAB) donor, and the base station 12 corresponding to a relay station (relay) may be referred to as an IAB node.

The base station 10 may be connected with a core network 30 via the another base station 10 or directly. The core network 30 may include at least one of, for example, an Evolved Packet Core (EPC), a 5G Core Network (5GCN) and a Next Generation Core (NGC).

The user terminal 20 is a terminal that supports at least one of communication schemes such as LTE, LTE-A and 5G.

The radio communication system 1 may use an Orthogonal Frequency Division Multiplexing (OFDM)-based radio access scheme. For example, on at least one of Downlink (DL) and Uplink (UL), Cyclic Prefix OFDM (CP-OFDM), Discrete Fourier Transform Spread OFDM (DFT-s-OFDM), Orthogonal Frequency Division Multiple Access (OFDMA) and Single Carrier Frequency Division Multiple Access (SC-FDMA) may be used.

The radio access scheme may be referred to as a waveform. In addition, the radio communication system 1 may use another radio access scheme (e.g., another single carrier transmission scheme or another multicarrier transmission scheme) as the radio access scheme on UL and DL.

The radio communication system 1 may use a downlink shared channel (PDSCH: Physical Downlink Shared Channel) shared by each user terminal 20, a broadcast channel (PBCH: Physical Broadcast Channel) and a downlink control channel (PDCCH: Physical Downlink Control Channel) as downlink channels.

Furthermore, the radio communication system 1 uses an uplink shared channel (PUSCH: Physical Uplink Shared Channel) shared by each user terminal 20, an uplink control channel (PUCCH: Physical Uplink Control Channel) and a random access channel (PRACH: Physical Random Access Channel) as uplink channels.

User data, higher layer control information and a System Information Block (SIB) are conveyed on the PDSCH. The user data and the higher layer control information may be conveyed on the PUSCH. Furthermore, a Master Information Block (MIB) may be conveyed on the PBCH.

Lower layer control information may be conveyed on the PDCCH. The lower layer control information may include, for example, Downlink Control Information (DCI) including scheduling information of at least one of the PDSCH and the PUSCH.

In addition, DCI for scheduling the PDSCH may be referred to as a DL assignment or DL DCI, and DCI for scheduling the PUSCH may be referred to as a UL grant or UL DCI. In this regard, the PDSCH may be read as DL data, and the PUSCH may be read as UL data.

A COntrol REsource SET (CORESET) and a search space may be used to detect the PDCCH. The CORESET corresponds to a resource for searching DCI. The search space corresponds to a search domain and a search method of PDCCH candidates. One CORESET may be associated with one or a plurality of search spaces. The UE may monitor a CORESET associated with a certain search space based on a search space configuration.

One SS may be associated with a PDCCH candidate corresponding to one or a plurality of aggregation levels. One or a plurality of search spaces may be referred to as a search space set. In addition, a "search space", a "search space set", a "search space configuration", a "search space set configuration", a "CORESET" and a "CORESET configuration" in the present disclosure may be interchangeably read.

Channel State Information (CSI), transmission acknowledgement information (that may be referred to as, for example, Hybrid Automatic Repeat reQuest (HARQ)-ACK or ACK/NACK) or a Scheduling Request (SR) may be conveyed on the PUCCH. A random access preamble for establishing connection with a cell may be conveyed on the PRACH.

In addition, downlink and uplink in the present disclosure may be expressed without adding "link" thereto. Furthermore, various channels may be expressed without adding "physical" to heads of the various channels.

The radio communication system 1 may convey a Synchronization Signal (SS) and a Downlink Reference Signal (DL-RS). The radio communication system 1 conveys a Cell-specific Reference Signal (CRS), a Channel State Information Reference Signal (CSI-RS), a DeModulation Reference Signal (DMRS), a Positioning Reference Signal (PRS) and a Phase Tracking Reference Signal (PTRS) as DL-RSs.

The synchronization signal may be at least one of, for example, a Primary Synchronization Signal (PSS) and a Secondary Synchronization Signal (SSS). A signal block including the SS (the PSS or the SSS) and the PBCH (and the DMRS for the PBCH) may be referred to as an SS/PBCH block or an SS Block (SSB). In addition, the SS and the SSB may be also referred to as reference signals.

Furthermore, the radio communication system 1 may convey a Sounding Reference Signal (SRS) and a DeModulation Reference Signal (DMRS) as UpLink Reference Signals (UL-RSs). In this regard, the DMRS may be referred to as a user terminal-specific reference signal (UE-specific reference signal).

### (Base Station)

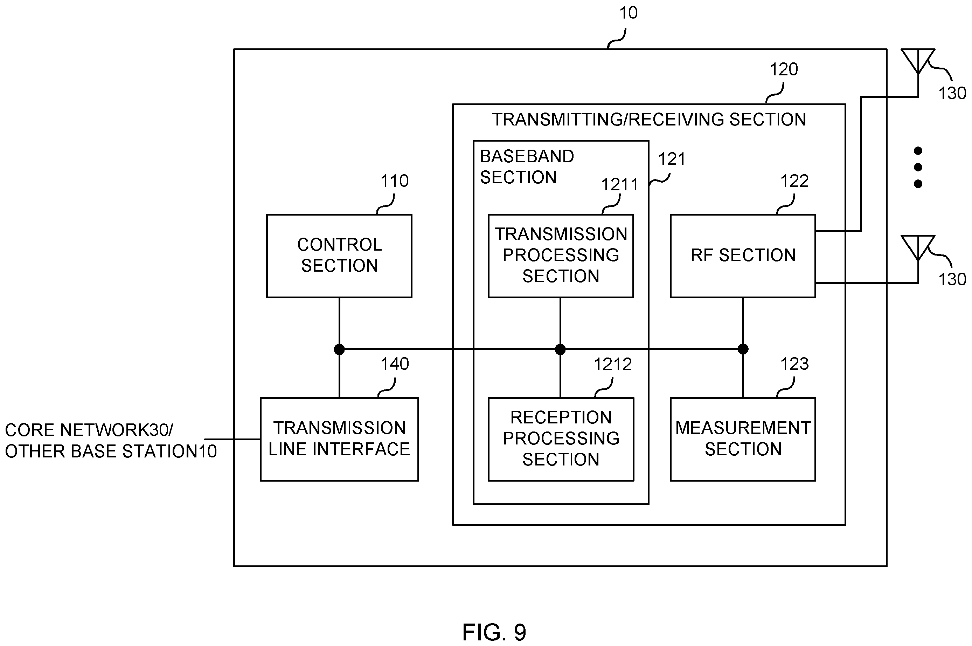

Fig. 9 is a diagram illustrating one example of a configuration of the base station according to the one embodiment. The base station 10 includes a control section 110, a transmission/reception section 120, transmission/reception antennas 130 and a transmission line interface 140. In addition, the base station 10 may include one or more of each of the control sections 110, the transmission/reception sections 120, the transmission/reception antennas 130 and the transmission line interfaces 140.

In addition, this example mainly illustrates function blocks of characteristic portions according to the present embodiment, and may assume that the base station 10 includes other function blocks, too, that are necessary for radio communication. Part of processing of each section described below may be omitted.

The control section 110 controls the entire base station 10. The control section 110 can be composed of a controller or a control circuit described based on the common knowledge in the technical field according to the present disclosure.

The control section 110 may control signal generation and scheduling (e.g., resource allocation or mapping). The control section 110 may control transmission/reception and measurement that use the transmission/reception section 120, the transmission/reception antennas 130 and the transmission line interface 140. The control section 110 may generate data, control information or a sequence to be transmitted as a signal, and forward the signal to the transmission/reception section 120. The control section 110 may perform call processing (such as configuration and release) of a communication channel, state management of the base station 10 and radio resource management.

The transmission/reception section 120 may include a baseband section 121, a Radio Frequency (RF) section 122 and a measurement section 123. The baseband section 121 may include a transmission processing section 1211 and a reception processing section 1212. The transmission/reception section 120 can be composed of a transmitter/receiver, an RF circuit, a baseband circuit, a filter, a phase shifter, a measurement circuit or a transmission/reception circuit described based on the common knowledge in the technical field according to the present disclosure.

The transmission/reception section 120 may be composed as an integrated transmission/reception section, or may be composed of a transmission section and a reception section. The transmission section may be composed of the transmission processing section 1211 and the RF section 122. The reception section may be composed of the reception processing section 1212, the RF section 122 and the measurement section 123.

The transmission/reception antenna 130 can be composed of an antenna such an array antenna described based on the common knowledge in the technical field according to the present disclosure.

The transmission/reception section 120 may transmit the above-described downlink channel, synchronization signal and downlink reference signal. The transmission/reception section 120 may receive the above-described uplink channel and uplink reference signal.

The transmission/reception section 120 may form at least one of a transmission beam and a reception beam by using digital beam forming (e.g., precoding) or analog beam forming (e.g., phase rotation).

The transmission/reception section 120 (transmission processing section 1211) may perform Packet Data Convergence Protocol (PDCP) layer processing, Radio Link Control (RLC) layer processing (e.g., RLC retransmission control), and Medium Access Control (MAC) layer processing (e.g., HARQ retransmission control) on, for example, the data and the control information obtained from the control section 110, and generate a bit sequence to transmit.

The transmission/reception section 120 (transmission processing section 1211) may perform transmission processing such as channel coding (that may include error correction coding), modulation, mapping, filter processing, Discrete Fourier Transform (DFT) processing (when needed), Inverse Fast Fourier Transform (IFFT) processing, precoding and digital-analog conversion on the bit sequence to transmit, and output a baseband signal.

The transmission/reception section 120 (RF section 122) may modulate the baseband signal into a radio frequency range, perform filter processing and amplification on the signal, and transmit the signal of the radio frequency range via the transmission/reception antennas 130.

On the other hand, the transmission/reception section 120 (RF section 122) may perform amplification and filter processing on the signal of the radio frequency range received by the transmission/reception antennas 130, and demodulate the signal into a baseband signal.

The transmission/reception section 120 (reception processing section 1212) may apply reception processing such as analog-digital conversion, Fast Fourier Transform (FFT) processing, Inverse Discrete Fourier Transform (IDFT) processing (when needed), filter processing, demapping, demodulation, decoding (that may include error correction decoding), MAC layer processing, RLC layer processing and PDCP layer processing to the obtained baseband signal, and obtain user data.

The transmission/reception section 120 (measurement section 123) may perform measurement related to the received signal. For example, the measurement section 123 may perform Radio Resource Management (RRM) measurement or Channel State Information (CSI) measurement based on the received signal. The measurement section 123 may measure received power (e.g., Reference Signal Received Power (RSRP)), received quality (e.g., Reference Signal Received Quality (RSRQ), a Signal to Interference plus Noise Ratio (SINR) or a Signal to Noise Ratio (SNR)), a signal strength (e.g., a Received Signal Strength Indicator (RSSI)) or channel information (e.g., CSI). The measurement section 123 may output a measurement result to the control section 110.

The transmission line interface 140 may transmit and receive (backhaul signaling) signals to and from apparatuses and the other base stations 10 included in the core network 30, and obtain and convey user data (user plane data) and control plane data for the user terminal 20.

In addition, the transmission section and the reception section of the base station 10 according to the present disclosure may be composed of at least one of the transmission/reception section 120, the transmission/reception antenna 130 and the transmission line interface 140.

The control section 110 controls a parameter K1 that is set to DCI by using a time unit (unit) whose granularity is smaller than 1 slot as a time unit that indicates an HARQ-ACK transmission timing.

Furthermore, the control section 110 can determine the granularity of the unit that is the time unit that indicates the HARQ-ACK transmission timing based on a length (time domain) of a PDSCH. The unit granularity can be dynamically switched according to the length of the PDSCH to be scheduled. When, for example, the number of symbols (N) to be allocated to the PDSCH is smaller than 7 symbols (N < 7), twice as much a granularity as the number of symbols (N) is applicable to the unit. On the other hand, when the number of symbols (N) to be allocated to the PDSCH is larger than 7 symbols (N ≥ 7), the same granularity as the number of symbols (N) of the PDSCH is applicable to the unit.

Furthermore, the control section 110 configures a plurality of PUCCH resource sets by using a higher layer signaling.

### (User Terminal)

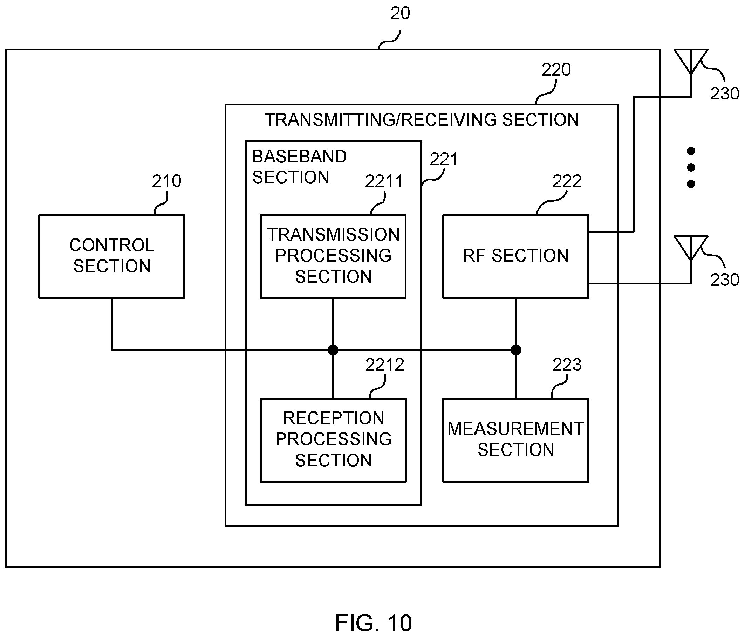

Fig. 10 is a diagram illustrating one example of a configuration of the user terminal according to the one embodiment. The user terminal 20 includes a control section 210, a transmission/reception section 220 and transmission/reception antennas 230. In this regard, the user terminal 20 may include one or more of each of the control sections 210, the transmission/reception sections 220 and the transmission/reception antennas 230.

In addition, this example mainly illustrates function blocks of characteristic portions according to the present embodiment, and may assume that the user terminal 20 includes other function blocks, too, that are necessary for radio communication. Part of processing of each section described below may be omitted.

The control section 210 controls the entire user terminal 20. The control section 210 can be composed of a controller or a control circuit described based on the common knowledge in the technical field according to the present disclosure.

The control section 210 may control signal generation and mapping. The control section 210 may control transmission/reception and measurement that use the transmission/reception section 220 and the transmission/reception antennas 230. The control section 210 may generate data, control information or a sequence to be transmitted as a signal, and forward the signal to the transmission/reception section 220.

The transmission/reception section 220 may include a baseband section 221, an RF section 222 and a measurement section 223. The baseband section 221 may include a transmission processing section 2211 and a reception processing section 2212. The transmission/reception section 220 can be composed of a transmitter/receiver, an RF circuit, a baseband circuit, a filter, a phase shifter, a measurement circuit or a transmission/reception circuit described based on the common knowledge in the technical field according to the present disclosure.

The transmission/reception section 220 may be composed as an integrated transmission/reception section, or may be composed of a transmission section and a reception section. The transmission section may be composed of the transmission processing section 2211 and the RF section 222. The reception section may be composed of the reception processing section 2212, the RF section 222 and the measurement section 223.

The transmission/reception antenna 230 can be composed of an antenna such an array antenna described based on the common knowledge in the technical field according to the present disclosure.

The transmission/reception section 220 may receive the above-described downlink channel, synchronization signal and downlink reference signal. The transmission/reception section 220 may transmit the above-described uplink channel and uplink reference signal.

The transmission/reception section 220 may form at least one of a transmission beam and a reception beam by using digital beam forming (e.g., precoding) or analog beam forming (e.g., phase rotation).

The transmission/reception section 220 (transmission processing section 2211) may perform PDCP layer processing, RLC layer processing (e.g., RLC retransmission control) and MAC layer processing (e.g., HARQ retransmission control) on, for example, the data and the control information obtained from the control section 210, and generate a bit sequence to transmit.

The transmission/reception section 220 (transmission processing section 2211) may perform transmission processing such as channel coding (that may include error correction coding), modulation, mapping, filter processing, DFT processing (when needed), IFFT processing, precoding and digital-analog conversion on the bit sequence to transmit, and output a baseband signal.

In this regard, whether or not to apply the DFT processing may be based on a configuration of transform precoding. When transform precoding is enabled for a certain channel (e.g., PUSCH), the transmission/reception section 220 (transmission processing section 2211) may perform the DFT processing as the above transmission processing to transmit the certain channel by using a DFT-s-OFDM waveform. When precoding is not enabled, the transmission/reception section 220 (transmission processing section 2211) may not perform the DFT processing as the above transmission processing.

The transmission/reception section 220 (RF section 222) may modulate the baseband signal into a radio frequency range, perform filter processing and amplification on the signal, and transmit the signal of the radio frequency range via the transmission/reception antennas 230.

On the other hand, the transmission/reception section 220 (RF section 222) may perform amplification and filter processing on the signal of the radio frequency range received by the transmission/reception antennas 230, and demodulate the signal into a baseband signal.

The transmission/reception section 220 (reception processing section 2212) may apply reception processing such as analog-digital conversion, FFT processing, IDFT processing (when needed), filter processing, demapping, demodulation, decoding (that may include error correction decoding), MAC layer processing, RLC layer processing and PDCP layer processing to the obtained baseband signal, and obtain user data.

The transmission/reception section 220 (measurement section 223) may perform measurement related to the received signal. For example, the measurement section 223 may perform RRM measurement or CSI measurement based on the received signal. The measurement section 223 may measure received power (e.g., RSRP), received quality (e.g., RSRQ, an SINR or an SNR), a signal strength (e.g., RSSI) or channel information (e.g., CSI). The measurement section 223 may output a measurement result to the control section 210.

In addition, the transmission section and the reception section of the user terminal 20 according to the present disclosure may be composed of at least one of the transmission/reception section 220, the transmission/reception antenna 230 and the transmission line interface 240.

The control section 210 determines a transmission timing of a transmission acknowledgement signal (HARQ-ACK) for a downlink shared channel (PDSCH) in a unit of a given number of symbols shorter than 1 slot based on Downlink Control Information (DCI) used to schedule the downlink shared channel (PDSCH).

Furthermore, the control section 210 can determine a granularity of the unit that is a time unit that indicates an HARQ-ACK transmission timing based on a length (time domain) of the PDSCH. The unit granularity can be dynamically switched according to the length of the PDSCH to be scheduled.

Furthermore, the control section 210 may configure PUCCH resource sets that comply with the above first configuration and PUCCH resource sets that comply with the above second configuration together, and switch the PUCCH resource sets according to a service type.

Furthermore, when a plurality of PUCCHs configured to a given slot, and a PUSCH overlap, the control section 210 performs control to transmit at least part of HARQ-ACKs among HARQ-ACKs respectively allocated to a plurality of PUCCHs by using the PUSCH.

Furthermore, when a DMRS is arranged in a symbol in which the PUCCHs collide in the PUSCH, the control section 210 multiplexes HARQ-ACKs on a next symbol. Furthermore, when a plurality of PUCCHs configured to a given slot, and the PUSCH overlap, the control section 210 may drop the PUSCH. When the dropped PUSCH includes UCI, the control section 210 multiplexes at least HARQ-ACKs on a last or first PUCCH that has collided to transmit. Furthermore, when a plurality of PUCCHs configured to the given slot, and the PUSCH overlap, the control section 210 can take handling in an error case. For example, the control section 210 gives notification of an error or does not given any notification in the error case. Furthermore, when a plurality of PUCCHs configured to the given slot, and the PUSCH overlap, and only when a size of each PUCCH is 2 bits at maximum, the control section 210 permits transmission of HARQ-ACK that uses the PUCCH. In this case, the control section 210 punctures resources that collide with PUCCHs in the PUSCH.

Furthermore, when a plurality of PUCCHs configured to the given slot overlap (collide), the control section 210 performs control to set all HARQ-ACKs on these PUCCHs to one HARQ-ACK codebook to transmit by using one of the PUCCHs. Furthermore, the control section 210 may prepare special PUCCH resources as PUCCH resources used to transmit a plurality of HARQ-ACKs. Information of the special PUCCH resources may be notified to the user terminal by a higher layer signaling. When a plurality of PUCCHs configured to the given slot overlap (collide), the user terminal sets all HARQ-ACKs on these PUCCHs to one HARQ-ACK codebook to transmit by using the special PUCCH resources.

Furthermore, when a plurality of PUCCHs configured to the given slot overlap (collide), the control section 210 may set all HARQ-ACKs on these PUCCHs to different HARQ-ACK codebooks to transmit by using one of PUCCHs. Furthermore, when a plurality of PUCCHs configured to the given slot overlap (collide), the control section 210 may set part of HARQ-ACKs to one or a plurality of HARQ-ACK codebooks to transmit by using one of PUCCHs, and drop the rest of HARQ-ACKs. The control section 210 can apply a given rule described in the second aspect to which HARQ-ACKs on which PUCCHs to keep.

Furthermore, the control section 210 may switch the second aspect that specifies an operation in a case where a plurality of PUCCHs configured to a given slot, and a PUSCH (or a long PUCCH) collide, and the third aspect that specifies an operation in a case where a plurality of PUCCHs configured to a given slot collide, according to a service type (URLLC or eMBB).

Furthermore, when transmission timings (slots) of HARQ-ACKs notified by the DCI are the same, and when a PUCCH resource to which one of HARQ-ACKs has been allocated is the temporally earliest PUCCH resource in the slot, the control section 210 performs control to set a plurality of HARQ-ACKs to one HARQ-ACK codebook to collectively transmit in a given resource.

Furthermore, when a plurality of PUCCH resources configured to the given slot collide, and when a plurality of PUCCH resources that collide include the temporally earliest PUCCH resource in the given slot, the control section 210 sets to one HARQ-ACK codebook a plurality of HARQ-ACKs on a plurality of these PUCCH resources that collide to multiplex on one of the PUCCH resources.

### (Hardware Configuration)

In addition, the block diagrams used to describe the above embodiment illustrate blocks in function units. These function blocks (components) are realized by an arbitrary combination of at least ones of hardware components and software components. Furthermore, a method for realizing each function block is not limited in particular. That is, each function block may be realized by using one physically or logically coupled apparatus or may be realized by connecting two or more physically or logically separate apparatuses directly or indirectly (by using, for example, wired connection or radio connection) and using a plurality of these apparatuses. Each function block may be realized by combining software with the above one apparatus or a plurality of above apparatuses.

In this regard, the functions include deciding, determining, judging, calculating, computing, processing, deriving, investigating, looking up, ascertaining, receiving, transmitting, outputting, accessing, resolving, selecting, choosing, establishing, comparing, assuming, expecting, considering, broadcasting, notifying, communicating, forwarding, configuring, reconfiguring, allocating, mapping, and assigning, yet are not limited to these. For example, a function block (component) that causes transmission to function may be referred to as a transmitting unit or a transmitter. As described above, the method for realizing each function block is not limited in particular.

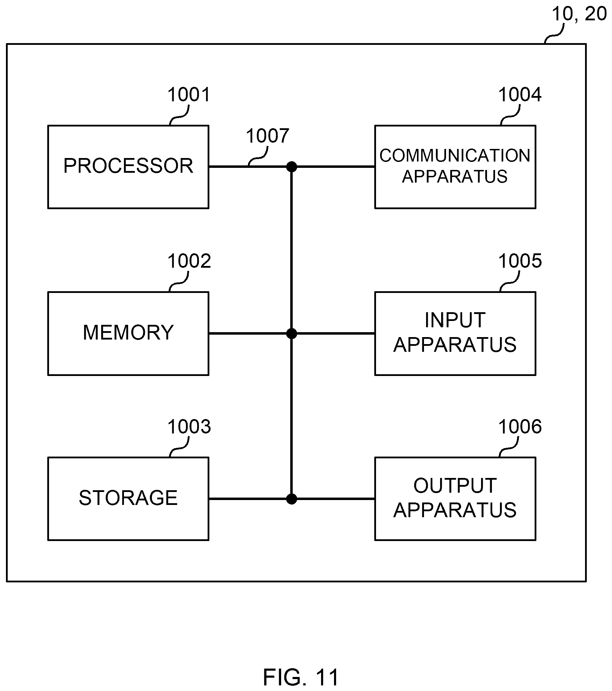

For example, the base station and the user terminal according to the one embodiment of the present disclosure may function as computers that perform processing of the radio communication method according to the present disclosure. Fig. 11 is a diagram illustrating one example of the hardware configurations of the base station and the user terminal according to the one embodiment. The above-described base station 10 and user terminal 20 may be each physically configured as a computer apparatus that includes a processor 1001, a memory 1002, a storage 1003, a communication apparatus 1004, an input apparatus 1005, an output apparatus 1006 and a bus 1007.

In this regard, words such as an apparatus, a circuit, a device, a section and a unit in the present disclosure can be interchangeably read. The hardware configurations of the base station 10 and the user terminal 20 may be configured to include one or a plurality of apparatuses illustrated in Fig. 11 or may be configured without including part of the apparatuses.

For example, Fig. 11 illustrates the only one processor 1001. However, there may be a plurality of processors. Furthermore, processing may be executed by 1 processor or processing may be executed by 2 or more processors concurrently or successively or by using another method. In addition, the processor 1001 may be implemented by 1 or more chips.

Each function of the base station 10 and the user terminal 20 is realized by, for example, causing hardware such as the processor 1001 and the memory 1002 to read given software (program), and thereby causing the processor 1001 to perform an operation, and control communication via the communication apparatus 1004 and control at least one of reading and writing of data in the memory 1002 and the storage 1003.

The processor 1001 causes, for example, an operating system to operate to control the entire computer. The processor 1001 may be composed of a Central Processing Unit (CPU) including an interface for a peripheral apparatus, a control apparatus, an operation apparatus and a register. For example, at least part of the above-described control section 110 (210) and transmission/reception section 120 (220) may be realized by the processor 1001.

Furthermore, the processor 1001 reads programs (program codes), software modules or data from at least one of the storage 1003 and the communication apparatus 1004 out to the memory 1002, and executes various types of processing according to these programs, software modules or data. As the programs, programs that cause the computer to execute at least part of the operations described in the above-described embodiment are used. For example, the control section 110 (210) may be realized by a control program that is stored in the memory 1002 and operates on the processor 1001, and other function blocks may be also realized likewise.

The memory 1002 is a computer-readable recording medium, and may be composed of at least one of, for example, a Read Only Memory (ROM), an Erasable Programmable ROM (EPROM), an Electrically EPROM (EEPROM), a Random Access Memory (RAM) and other appropriate storage media. The memory 1002 may be referred to as a register, a cache or a main memory (main storage apparatus). The memory 1002 can store programs (program codes) and software modules that can be executed to perform the radio communication method according to the one embodiment of the present disclosure.

The storage 1003 is a computer-readable recording medium, and may be composed of at least one of, for example, a flexible disk, a floppy (registered trademark) disk, a magnetooptical disk (e.g., a compact disk (Compact Disc ROM (CD-ROM)), a digital versatile disk and a Blu-ray (registered trademark) disk), a removable disk, a hard disk drive, a smart card, a flash memory device (e.g., a card, a stick or a key drive), a magnetic stripe, a database, a server and other appropriate storage media. The storage 1003 may be referred to as an auxiliary storage apparatus.

The communication apparatus 1004 is hardware (transmission/reception device) that performs communication between computers via at least one of a wired network and a radio network, and is also referred to as, for example, a network device, a network controller, a network card and a communication module. The communication apparatus 1004 may be configured to include a high frequency switch, a duplexer, a filter and a frequency synthesizer to realize at least one of, for example, Frequency Division Duplex (FDD) and Time Division Duplex (TDD). For example, the above-described transmission/reception section 120 (220) and transmission/reception antennas 130 (230) may be realized by the communication apparatus 1004. The transmission/reception section 120 (220) may be physically or logically separately implemented as a transmission section 120a (220a) and a reception section 120b (220b).

The input apparatus 1005 is an input device (e.g., a keyboard, a mouse, a microphone, a switch, a button or a sensor) that accepts an input from an outside. The output apparatus 1006 is an output device (e.g., a display, a speaker or a Light Emitting Diode (LED) lamp) that sends an output to the outside. In addition, the input apparatus 1005 and the output apparatus 1006 may be an integrated component (e.g., touch panel).

Furthermore, each apparatus such as the processor 1001 or the memory 1002 is connected by the bus 1007 that communicates information. The bus 1007 may be composed by using a single bus or may be composed by using different buses between apparatuses.

Furthermore, the base station 10 and the user terminal 20 may be configured to include hardware such as a microprocessor, a Digital Signal Processor (DSP), an Application Specific Integrated Circuit (ASIC), a Programmable Logic Device (PLD) and a Field Programmable Gate Array (FPGA). The hardware may be used to realize part or entirety of each function block. For example, the processor 1001 may be implemented by using at least one of these hardware components.

### (Modified Example)

In addition, each term that has been described in the present disclosure and each term that is necessary to understand the present disclosure may be replaced with terms having identical or similar meanings. For example, a channel, a symbol and a signal (a signal or a signaling) may be interchangeably read. Furthermore, a signal may be a message. A reference signal can be also abbreviated as an RS (Reference Signal), or may be referred to as a pilot or a pilot signal depending on standards to be applied. Furthermore, a Component Carrier (CC) may be referred to as a cell, a frequency carrier and a carrier frequency.

A radio frame may include one or a plurality of durations (frames) in a time domain. Each of one or a plurality of durations (frames) that makes up a radio frame may be referred to as a subframe. Furthermore, the subframe may include one or a plurality of slots in the time domain. The subframe may be a fixed time duration (e.g., 1 ms) that does not depend on a numerology.

In this regard, the numerology may be a communication parameter to be applied to at least one of transmission and reception of a certain signal or channel. The numerology may indicate at least one of, for example, a SubCarrier Spacing (SCS), a bandwidth, a symbol length, a cyclic prefix length, a Transmission Time Interval (TTI), the number of symbols per TTI, a radio frame configuration, specific filtering processing performed by a transceiver in a frequency domain, and specific windowing processing performed by the transceiver in a time domain.

The slot may include one or a plurality of symbols (Orthogonal Frequency Division Multiplexing (OFDM) symbols or Single Carrier Frequency Division Multiple Access (SC-FDMA) symbols) in the time domain. Furthermore, the slot may be a time unit based on the numerology.

The slot may include a plurality of mini slots. Each mini slot may include one or a plurality of symbols in the time domain. Furthermore, the mini slot may be referred to as a subslot. The mini slot may include a smaller number of symbols than that of the slot. The PDSCH (or the PUSCH) to be transmitted in larger time units than that of the mini slot may be referred to as a PDSCH (PUSCH) mapping type A. The PDSCH (or the PUSCH) to be transmitted by using the mini slot may be referred to as a PDSCH (PUSCH) mapping type B.

The radio frame, the subframe, the slot, the mini slot and the symbol each indicate a time unit for conveying signals. The other corresponding names may be used for the radio frame, the subframe, the slot, the mini slot and the symbol. In addition, time units such as a frame, a subframe, a slot, a mini slot and a symbol in the present disclosure may be interchangeably read.

For example, 1 subframe may be referred to as a TTI, a plurality of contiguous subframes may be referred to as TTIs, or 1 slot or 1 mini slot may be referred to as a TTI. That is, at least one of the subframe and the TTI may be a subframe (1 ms) according to legacy LTE, may be a duration (e.g., 1 to 13 symbols) shorter than 1 ms or may be a duration longer than 1 ms. In addition, a unit that indicates the TTI may be referred to as a slot or a mini slot instead of a subframe.

In this regard, the TTI refers to, for example, a minimum time unit of scheduling of radio communication. For example, in the LTE system, the base station performs scheduling for allocating radio resources (a frequency bandwidth or transmission power that can be used in each user terminal) in TTI units to each user terminal. In this regard, a definition of the TTI is not limited to this.

The TTI may be a transmission time unit of a channel-coded data packet (transport block), code block or codeword, or may be a processing unit of scheduling or link adaptation. In addition, when the TTI is given, a time period (e.g., the number of symbols) in which a transport block, a code block or a codeword is actually mapped may be shorter than the TTI.

In addition, when 1 slot or 1 mini slot is referred to as a TTI, 1 or more TTIs (i.e., 1 or more slots or 1 or more mini slots) may be a minimum time unit of scheduling. Furthermore, the number of slots (the number of mini slots) that make up a minimum time unit of the scheduling may be controlled.

The TTI having the time duration of 1 ms may be referred to as a general TTI (TTIs according to 3GPP Rel. 8 to 12), a normal TTI, a long TTI, a general subframe, a normal subframe, a long subframe or a slot. A TTI shorter than the general TTI may be referred to as a reduced TTI, a short TTI, a partial or fractional TTI, a reduced subframe, a short subframe, a mini slot, a subslot or a slot.

In addition, the long TTI (e.g., the general TTI or the subframe) may be read as a TTI having a time duration exceeding 1 ms, and the short TTI (e.g., the reduced TTI) may be read as a TTI having a TTI length less than the TTI length of the long TTI and equal to or more than 1 ms.

A Resource Block (RB) is a resource allocation unit of the time domain and the frequency domain, and may include one or a plurality of contiguous subcarriers in the frequency domain. The numbers of subcarriers included in RBs may be the same irrespectively of a numerology, and may be, for example, 12. The numbers of subcarriers included in the RBs may be determined based on the numerology.

Furthermore, the RB may include one or a plurality of symbols in the time domain or may have the length of 1 slot, 1 mini slot, 1 subframe or 1 TTI. 1 TTI or 1 subframe may each include one or a plurality of resource blocks.

In this regard, one or a plurality of RBs may be referred to as a Physical Resource Block (PRB: Physical RB), a Sub-Carrier Group (SCG), a Resource Element Group (REG), a PRB pair or an RB pair.

Furthermore, the resource block may include one or a plurality of Resource Elements (REs). For example, 1 RE may be a radio resource domain of 1 subcarrier and 1 symbol.

A Bandwidth Part (BWP) (that may be referred to as a partial bandwidth) may mean a subset of contiguous common Resource Blocks (common RBs) for a certain numerology in a certain carrier. In this regard, the common RB may be specified by an RB index based on a common reference point of the certain carrier. A PRB may be defined based on a certain BWP, and may be numbered in the certain BWP.

The BWP may include a BWP for UL (UL BWP) and a BWP for DL (DL BWP). One or a plurality of BWPs in 1 carrier may be configured to the UE.

At least one of the configured BWPs may be active, and the UE may not assume that given signals/channels are transmitted and received outside the active BWP. In addition, a "cell" and a "carrier" in the present disclosure may be read as a "BWP".

In this regard, structures of the above-described radio frame, subframe, slot, mini slot and symbol are only exemplary structures. For example, configurations such as the number of subframes included in a radio frame, the number of slots per subframe or radio frame, the number of mini slots included in a slot, the numbers of symbols and RBs included in a slot or a mini slot, the number of subcarriers included in an RB, the number of symbols in a TTI, a symbol length and a Cyclic Prefix (CP) length can be variously changed.

Furthermore, the information and the parameters described in the present disclosure may be expressed by using absolute values, may be expressed by using relative values with respect to given values or may be expressed by using other corresponding information. For example, a radio resource may be instructed by a given index.

Names used for parameters in the present disclosure are in no respect restrictive names. Furthermore, numerical expressions that use these parameters may be different from those explicitly disclosed in the present disclosure. Various channels (such as a Physical Uplink Control Channel (PUCCH) and a Physical Downlink Control Channel (PDCCH)) and information elements can be identified based on various suitable names. Therefore, various names assigned to these various channels and information elements are in no respect restrictive names.

The information and the signals described in the present disclosure may be expressed by using one of various different techniques. For example, the data, the instructions, the commands, the information, the signals, the bits, the symbols and the chips mentioned in the above entire description may be expressed as voltages, currents, electromagnetic waves, magnetic fields or magnetic particles, optical fields or photons, or arbitrary combinations of these.

Furthermore, the information and the signals can be output at least one of from a higher layer to a lower layer and from the lower layer to the higher layer. The information and the signals may be input and output via a plurality of network nodes.

The input and output information and signals may be stored in a specific location (e.g., memory) or may be managed by using a management table. The information and signals to be input and output can be overridden, updated or additionally written. The output information and signals may be deleted. The input information and signals may be transmitted to other apparatuses.

Notification of information is not limited to the aspects/embodiment described in the present disclosure and may be performed by using other methods. For example, the information may be notified in the present disclosure by a physical layer signaling (e.g., Downlink Control Information (DCI) and Uplink Control Information (UCI)), a higher layer signaling (e.g., a Radio Resource Control (RRC) signaling, broadcast information (such as a Master Information Block (MIB) and a System Information Block (SIB)), and a Medium Access Control (MAC) signaling), other signals or combinations of these.

In addition, the physical layer signaling may be referred to as Layer 1/Layer 2 (L1/L2) control information (L1/L2 control signal) or L1 control information (L1 control signal). Furthermore, the RRC signaling may be referred to as an RRC message, and may be, for example, an RRCConnectionSetup message or an RRCConnectionReconfiguration message. Furthermore, the MAC signaling may be notified by using, for example, an MAC Control Element (MAC CE).

Furthermore, notification of given information (e.g., notification of "being X") is not limited to explicit notification, and may be given implicitly (by, for example, not giving notification of the given information or by giving notification of another information).

Decision may be made based on a value (0 or 1) expressed as 1 bit, may be made based on a boolean expressed as true or false or may be made by comparing numerical values (by, for example, making comparison with a given value).

Irrespectively of whether software is referred to as software, firmware, middleware, a microcode or a hardware description language or is referred to as other names, the software should be widely interpreted to mean a command, a command set, a code, a code segment, a program code, a program, a subprogram, a software module, an application, a software application, a software package, a routine, a subroutine, an object, an executable file, an execution thread, a procedure or a function.

Furthermore, software, commands and information may be transmitted and received via transmission media. When, for example, the software is transmitted from websites, servers or other remote sources by using at least ones of wired techniques (e.g., coaxial cables, optical fiber cables, twisted pairs and Digital Subscriber Lines (DSLs)) and radio techniques (e.g., infrared rays and microwaves), at least ones of these wired techniques and radio techniques are included in a definition of the transmission media.

The terms "system" and "network" used in the present disclosure can be interchangeably used. The "network" may mean an apparatus (e.g., base station) included in the network.

In the present disclosure, terms such as "precoding", a "precoder", a "weight (precoding weight)", "Quasi-Co-Location (QCL)", a "Transmission Configuration Indication state (TCI State)", a "spatial relation", a "spatial domain filter", "transmission power", "phase rotation", an "antenna port", an "antenna port group", a "layer", "the number of layers", a "rank", a "resource", a "resource set", a "resource group", a "beam", a "beam width", a "beam angle", an "antenna", an "antenna element" and a "panel" can be interchangeably used.

In the present disclosure, terms such as a "base Station (BS)", a "radio base station", a "fixed station", a "NodeB", an "eNodeB (eNB)", a "gNodeB (gNB)", an "access point", a "Transmission Point (TP)", a "Reception Point (RP)", a "Transmission/Reception Point (TRP)", a "panel", a "cell", a "sector", a "cell group", a "carrier" and a "component carrier" can be interchangeably used. The base station is also referred to as terms such as a macro cell, a small cell, a femtocell or a picocell.

The base station can accommodate one or a plurality of (e.g., three) cells. When the base station accommodates a plurality of cells, an entire coverage area of the base station can be partitioned into a plurality of smaller areas. Each smaller area can also provide a communication service via a base station subsystem (e.g., indoor small base station (RRH: Remote Radio Head)). The term "cell" or "sector" indicates part or the entirety of the coverage area of at least one of the base station and the base station subsystem that provide a communication service in this coverage.

In the present disclosure, the terms such as "Mobile Station (MS)", "user terminal", "user apparatus (UE: User Equipment)" and "terminal" can be interchangeably used.

The mobile station is also referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client or some other appropriate terms in some cases.

At least one of the base station and the mobile station may be referred to as a transmission apparatus, a reception apparatus or a radio communication apparatus. In addition, at least one of the base station and the mobile station may be a device mounted on a movable body or the movable body itself. The movable body may be a vehicle (e.g., a car or an airplane), may be a movable body (e.g., a drone or a self-driving car) that moves unmanned or may be a robot (a manned type or an unmanned type). In addition, at least one of the base station and the mobile station includes an apparatus, too, that does not necessarily move during a communication operation. For example, at least one of the base station and the mobile station may be an Internet of Things (IoT) device such as a sensor.

Furthermore, the base station in the present disclosure may be read as the user terminal. For example, each aspect/embodiment of the present disclosure may be applied to a configuration where communication between the base station and the user terminal is replaced with communication between a plurality of user terminals (that may be referred to as, for example, Device-to-Device (D2D) or Vehicle-to-Everything (V2X)). In this case, the user terminal 20 may be configured to include the functions of the above-described base station 10. Furthermore, words such as "uplink" and "downlink" may be read as a word (e.g., a "side") that matches terminal-to-terminal communication. For example, the uplink channel and the downlink channel may be read as side channels.

Similarly, the user terminal in the present disclosure may be read as the base station. In this case, the base station 10 may be configured to include the functions of the above-described user terminal 20.

In the present disclosure, operations performed by the base station are performed by an upper node of this base station depending on cases. Obviously, in a network including one or a plurality of network nodes including the base stations, various operations performed to communicate with a terminal can be performed by base stations, one or more network nodes (that are regarded as, for example, Mobility Management Entities (MMEs) or Serving-Gateways (S-GWs), yet are not limited to these) other than the base stations or a combination of these.

Each aspect/embodiment described in the present disclosure may be used alone, may be used in combination or may be switched and used when carried out. Furthermore, orders of the processing procedures, the sequences and the flowchart according to each aspect/embodiment described in the present disclosure may be rearranged unless contradictions arise. For example, the method described in the present disclosure presents various step elements by using an exemplary order and is not limited to the presented specific order.

Each aspect/embodiment described in the present disclosure may be applied to Long Term Evolution (LTE), LTE-Advanced (LTE-A), LTE-Beyond (LTE-B), SUPER 3G, IMT-Advanced, the 4th generation mobile communication system (4G), the 5th generation mobile communication system (5G), Future Radio Access (FRA), the New-Radio Access Technology (RAT), New Radio (NR), New radio access (NX), Future generation radio access (FX), Global System for Mobile communications (GSM) (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other appropriate radio communication methods, or next-generation systems that are enhanced based on these systems. Furthermore, a plurality of systems may be combined (for example, LTE or LTE-A and 5G may be combined) and applied.

The phrase "based on" used in the present disclosure does not mean "based only on" unless specified otherwise. In other words, the phrase "based on" means both of "based only on" and "based at least on".

Every reference to elements that use names such as "first" and "second" used in the present disclosure does not generally limit the quantity or the order of these elements. These names can be used in the present disclosure as a convenient method for distinguishing between two or more elements. Hence, the reference to the first and second elements does not mean that only two elements can be employed or the first element should precede the second element in some way.

The term "deciding (determining)" used in the present disclosure includes diverse operations in some cases. For example, "deciding (determining)" may be considered to "decide (determine)" judging, calculating, computing, processing, deriving, investigating, looking up, search and inquiry (e.g., looking up in a table, a database or another data structure), and ascertaining.

Furthermore, "deciding (determining)" may be considered to "decide (determine)" receiving (e.g., receiving information), transmitting (e.g., transmitting information), input, output and accessing (e.g., accessing data in a memory).

Furthermore, "deciding (determining)" may be considered to "decide (determine)" resolving, selecting, choosing, establishing and comparing. That is, "deciding (determining)" may be considered to "decide (determine)" some operation.

Furthermore, "deciding (determining)" may be read as "assuming", "expecting" and "considering".

The words "connected" and "coupled" used in the present disclosure or every modification of these words can mean every direct or indirect connection or coupling between 2 or more elements, and can include that 1 or more intermediate elements exist between the two elements "connected" or "coupled" with each other. The elements may be coupled or connected physically or logically or by a combination of these physical and logical connections. For example, "connection" may be read as "access".

It can be understood in the present disclosure that, when connected, the two elements are "connected" or "coupled" with each other by using 1 or more electric wires, cables or printed electrical connection, and by using electromagnetic energy having wavelengths in radio frequency domains, microwave domains or (both of visible and invisible) light domains in some non-restrictive and non-comprehensive examples.

A sentence that "A and B are different" in the present disclosure may mean that "A and B are different from each other". In this regard, the sentence may mean that "A and B are each different from C". Words such as "separate" and "coupled" may be also interpreted in a similar way to "different".

When the words "include" and "including" and modifications of these words are used in the present disclosure, these words intend to be comprehensive similar to the word "comprising". Furthermore, the word "or" used in the present disclosure intends to be not an exclusive OR.

When, for example, translation adds articles such as a, an and the in English in the present disclosure, the present disclosure may include that nouns coming after these articles are plural.

The invention according to the present disclosure has been described in detail above. However, it is obvious for a person skilled in the art that the invention according to the present disclosure is not limited to the embodiment described in the present disclosure. The invention according to the present disclosure can be carried out as modified and changed aspects without departing from the gist and the scope of the invention defined based on the recitation of the claims. Accordingly, the description of the present disclosure is intended for exemplary explanation, and does not bring any restrictive meaning to the invention according to the present disclosure.

## Claims

1. A terminal (20) comprising:
a control section (210) configured to determine, based on downlink control information used for scheduling a downlink shared channel, a transmission timing of an acknowledgement signal corresponding to the downlink shared channel in a unit of a given number of symbols shorter than a slot; and
a transmitting section (220) configured to transmit, based on an uplink control channel resource indicated by the downlink control information, the acknowledgement signal;
**characterized in that**,
when a plurality of uplink control channels carrying different acknowledgement signals overlap with an uplink shared channel, the control section controls:
to transmit, by using the uplink shared channel, acknowledgement signals corresponding to at least one uplink control channel of the plurality of uplink control channels, and
not to transmit an acknowledgement signal corresponding to other uplink control channels of the plurality of uplink control channels.

2. The terminal (20) according to claim 1, wherein the unit of the given number of symbols is 7 symbols.

3. The terminal (20) according to claim 1 or 2, wherein a number of bits of an uplink control channel resource indication field included in the downlink control information is configured based on higher layer signaling.

4. A radio communication method for a terminal (20), comprising:
determining, based on downlink control information used for scheduling a downlink shared channel, a transmission timing of an acknowledgement signal for the downlink shared channel in a unit of a given number of symbols shorter than a slot; and
transmitting, based on an uplink control channel resource indicated by the downlink control information, the acknowledgement signal,
**characterized in that**,
when a plurality of uplink control channels carrying different acknowledgement signals overlap with an uplink shared channel, the terminal controls:
to transmit, by using the uplink shared channel, acknowledgement signals corresponding to at least one uplink control channel of the plurality of uplink control channels, and
not to transmit an acknowledgement signal corresponding to other uplink control channels of the plurality of uplink control channels.

5. A base station (10) comprising:
a control section (110) configured to indicate, based on downlink control information used for scheduling a downlink shared channel, a transmission timing of an acknowledgement signal corresponding to the downlink shared channel in a unit of a given number of symbols shorter than a slot;
and
a receiving section (120) configured to receive the acknowledgement signal transmitted by using an uplink control channel resource indicated by the downlink control information,
**characterized in that**,
when a plurality of uplink control channels carrying different acknowledgement signals overlap with an uplink shared channel, the control section controls:
to receive, by using the uplink shared channel, acknowledgement signals corresponding to at least one uplink control channel of the plurality of uplink control channels, and
not to receive an acknowledgement signal corresponding to other uplink control channels of the plurality of uplink control channels.

6. A system comprising a terminal (20) according to any one of claims 1 to 3 and a base station (10) according to claim 5.

## Patentansprüche

1. Endgerät (20), umfassend:
einen Steuerabschnitt (210), der ausgebildet ist, basierend auf Downlink-Steuerinformationen, die für die Planung eines gemeinsam genutzten Downlink-Kanals verwendet werden, einen Übertragungszeitpunkt eines Bestätigungssignals, das dem gemeinsam genutzten Downlink-Kanal entspricht, in einer Einheit einer vorgegebenen Anzahl von Symbolen, die kürzer als ein Slot ist, zu bestimmen; und
einen Sendeabschnitt (220), der ausgebildet ist, basierend auf einer Uplink-Steuerkanalressource, die durch die Downlink-Steuerinformationen angezeigt wird, das Bestätigungssignal zu übertragen;
**dadurch gekennzeichnet, dass**
wenn eine Vielzahl von Uplink-Steuerkanälen, die verschiedene Bestätigungssignale tragen, mit einem gemeinsam genutzten Uplink-Kanal überlappen, der Steuerabschnitt Folgendes steuert:
die Bestätigungssignale, die mindestens einem Uplink-Steuerkanal der Vielzahl von Uplink-Steuerkanälen entsprechen, unter Verwendung des gemeinsam genutzten Uplink-Kanals zu übertragen, und ein Bestätigungssignal, das anderen Uplink-Steuerkanälen der Vielzahl von Uplink-Steuerkanälen entspricht, nicht zu übertragen.

2. Endgerät (20) nach Anspruch 1, wobei die Einheit der vorgegebenen Anzahl von Symbolen 7 Symbole ist.

3. Endgerät (20) nach Anspruch 1 oder 2, wobei eine Anzahl von Bits eines Ressourcenanzeigefelds für eine Uplink-Steuerkanalressource, das in den Downlink-Steuerinformationen enthalten ist, basierend auf Signalisierung auf höherer Schicht, ausgebildet ist.

4. Funkkommunikationsverfahren für ein Endgerät (20),
umfassend:
Bestimmen eines Übertragungszeitpunkts eines Bestätigungssignals für den gemeinsam genutzten Downlink-Kanal in einer Einheit einer vorgegebenen Anzahl von Symbolen, die kürzer als ein Slot ist, basierend auf Downlink-Steuerinformationen, die für die Planung eines gemeinsam genutzten Downlink-Kanals verwendet werden;
und
Übertragen des Bestätigungssignals, basierend auf einer Uplink-Steuerkanalressource, die durch die Downlink-Steuerinformationen angezeigt wird,
**dadurch gekennzeichnet, dass**
wenn eine Vielzahl von Uplink-Steuerkanälen, die verschiedene Bestätigungssignale tragen, mit einem gemeinsam genutzten Uplink-Kanal überlappen, das Benutzerendgerät Folgendes steuert:
Übertragen, unter Verwendung des gemeinsam genutzten Uplink-Kanals, Bestätigungssignale, die mindestens einem Uplink-Steuerkanal der Vielzahl von Uplink-Steuerkanälen entsprechen, und nicht Übertragen eines Bestätigungssignals, das anderen Uplink-Steuerkanälen der Vielzahl von Uplink-Steuerkanälen entspricht.

5. Basisstation (10), umfassend:
einen Steuerabschnitt (110), der ausgebildet ist, basierend auf Downlink-Steuerinformationen, die für die Planung eines gemeinsam genutzten Downlink-Kanals verwendet werden, einen Übertragungszeitpunkt eines Bestätigungssignals, das dem gemeinsam genutzten Downlink-Kanal entspricht, in einer Einheit einer vorgegebenen Anzahl von Symbolen, die kürzer als ein Slot ist, anzuzeigen; und
einen Empfangsabschnitt (120), der ausgebildet ist, das Bestätigungssignal zu empfangen, das unter Verwendung einer Uplink-Steuerkanalressource übertragen wird, die durch die Downlink-Steuerinformationen angezeigt wird,
**dadurch gekennzeichnet, dass**
wenn eine Vielzahl von Uplink-Steuerkanälen, die verschiedene Bestätigungssignale tragen, mit einem gemeinsam genutzten Uplink-Kanal überlappen, der Steuerabschnitt Folgendes steuert:
Empfangen der Bestätigungssignale, die mindestens einem Uplink-Steuerkanal der Vielzahl von Uplink-Steuerkanälen entsprechen, unter Verwendung des gemeinsam genutzten Uplink-Kanals, und Nichtempfangen eines Bestätigungssignals, das anderen Uplink-Steuerkanälen der Vielzahl von Uplink-Steuerkanälen entspricht.

6. System, umfassend ein Benutzerendgerät (20) nach einem der Ansprüche 1 bis 3 und eine Basisstation (10) nach Anspruch 5.

## Revendications

1. Terminal (20) comprenant :
une section de commande (210) configurée pour déterminer, sur la base d'informations de commande de liaison descendante utilisées pour planifier un canal partagé de liaison descendante, une temporisation de transmission d'un signal de confirmation correspondant au canal partagé de liaison descendante dans une unité d'un nombre donné de symboles plus courte qu'un créneau ; et
une section de transmission (220) configurée pour transmettre, sur la base d'une ressource de canal de commande de liaison montante indiquée par les informations de commande de liaison descendante, le signal de confirmation ;
**caractérisé en ce que**,
lorsqu'une pluralité de canaux de commande de liaison montante transportant différents signaux de confirmation se chevauchent avec un canal partagé de liaison montante, la section de commande commande :
la transmission, en utilisant le canal partagé de liaison montante, de signaux de confirmation correspondant à au moins un canal de commande de liaison montante de la pluralité de canaux de commande de liaison montante, et
la non-transmission d'un signal de confirmation correspondant à d'autres canaux de commande de liaison montante de la pluralité de canaux de commande de liaison montante.

2. Terminal (20) selon la revendication 1, dans lequel l'unité du nombre donné de symboles est de 7 symboles.

3. Terminal (20) selon la revendication 1 ou la revendication 2, dans lequel un nombre de bits d'un champ d'indication de ressource de canal de commande de liaison montante inclus dans les informations de commande de liaison descendante est configuré sur la base d'une signalisation de couche supérieure.

4. Procédé de communication radio pour un terminal (20), comprenant :
la détermination, sur la base d'informations de commande de liaison descendante utilisées pour planifier un canal partagé de liaison descendante, d'une temporisation de transmission d'un signal de confirmation pour le canal partagé de liaison descendante dans une unité d'un nombre donné de symboles plus courte qu'un créneau ;
et
la transmission, sur la base d'une ressource de canal de commande de liaison montante indiquée par les informations de commande de liaison descendante, du signal de confirmation,
**caractérisé en ce que**,
lorsqu'une pluralité de canaux de commande de liaison montante transportant différents signaux de confirmation se chevauchent avec un canal partagé de liaison montante, le terminal commande :
la transmission, en utilisant le canal partagé de liaison montante, de signaux de confirmation correspondant à au moins un canal de commande de liaison montante de la pluralité de canaux de commande de liaison montante, et
la non-transmission d'un signal de confirmation correspondant à d'autres canaux de commande de liaison montante de la pluralité de canaux de commande de liaison montante.

5. Station de base (10) comprenant :
une section de commande (110) configurée pour indiquer, sur la base d'informations de commande de liaison descendante utilisées pour planifier un canal partagé de liaison descendante, une temporisation de transmission d'un signal de confirmation correspondant au canal partagé de liaison descendante dans une unité d'un nombre donné de symboles plus courte qu'un créneau ; et
une section de réception (120) configurée pour recevoir le signal de confirmation transmis en utilisant une ressource de canal de commande de liaison montante indiquée par les informations de commande de liaison descendante,
**caractérisée en ce que**,
lorsqu'une pluralité de canaux de commande de liaison montante transportant différents signaux de confirmation se chevauchent avec un canal partagé de liaison montante, la section de commande commande :
la réception, en utilisant le canal partagé de liaison montante, de signaux de confirmation correspondant à au moins un canal de commande de liaison montante de la pluralité de canaux de commande de liaison montante, et la non-réception d'un signal de confirmation correspondant à d'autres canaux de commande de liaison montante de la pluralité de canaux de commande de liaison montante.

6. Système comprenant un terminal (20) selon l'une quelconque des revendications 1 à 3 et une station de base (10) selon la revendication 5.
